# FASCICULE DE BREVET EUROPEEN

(11) **EP 2 577 676 B1**
(45) Date de publication et mention de la délivrance du brevet: **23.07.2014**
(21) Numéro de dépôt: 11721332.2
(22) Date de dépôt: 25.05.2011
(51) Int. Cl.: C22B 3/00, C22B 60/00, C22B 3/06, C22B 7/00, C22B 60/04, G21C 19/46

(54) **PROCEDE DE TRAITEMENT DE COMBUSTIBLES NUCLEAIRES USES NE NECESSITANT PAS D'OPERATION DE DESEXTRACTION REDUCTRICE DU PLUTONIUM**
VERFAHREN ZUM AUFBEREITEN VON ABGEBRANNTEM KERNBRENNSTOFF OHNE REDUKTIVE RÜCKEXTRATION VON PLUTONIUM
PROCESS FOR TREATING SPENT NUCLEAR FUEL WITHOUT REDUCTIVE DEEXTRACTION OF PLUTONIUM

(30) Priorité: 27.05.2010 FR 1054087
(43) Date de publication de la demande: 10.04.2013
(73) Titulaire: Commissariat à l'Énergie Atomique et aux Énergies Alternatives, 75015 Paris (FR)
(72) Inventeur: SAUDRAY, Didier, F-84100 Orange (FR); DINH, Binh, F-30130 PontSaint Esprit (FR); BARON, Pascal, F-30200 Bagnols sur Cèze (FR); MASSON, Michel, F-84000 Avignon (FR); SOREL, Christian, F-30400 Villeneuve les Avignon (FR); MIGUIRDITCHIAN, Manuel, 84000 Avignon (FR)
(74) Mandataire: Ilgart, Jean-Christophe
(86) Numéro de dépôt international: PCT/EP2011/058562
(87) Numéro de publication internationale: WO 2011/147871

(56) Documents cités:
- EP-A1- 0 381 579
- WO-A1-2007/135178
- FR-A1- 2 591 213
- FR-A1- 2 642 561
- FR-A1- 2 862 804

## Description

### DOMAINE TECHNIQUE

La présente invention se rapporte à un procédé de traitement de combustibles nucléaires usés qui présente, entre autres avantages, de ne pas nécessiter d'opération de désextraction réductrice du plutonium.

Ce procédé trouve notamment application dans le traitement de combustibles d'oxyde d'uranium et de combustibles d'oxyde mixte d'uranium et de plutonium.

### ÉTAT DE LA TECHNIQUE ANTÉRIEURE

Les usines de traitement de combustibles nucléaires usés utilisent à ce jour le procédé PUREX (pour **P**lutonium **U**ranium **R**efining by **EX**traction) pour récupérer l'uranium et le plutonium présents dans ces combustibles.

Ceci est obtenu par la mise en oeuvre de plusieurs cycles de purification par extraction liquide-liquide. L'extractant utilisé est le phosphate de tri-n-butyle qui présente une affinité particulière pour l'uranium et le plutonium.

Le procédé PUREX, tel qu'il est mis en oeuvre dans les usines (UP2-800, UP3) de La Hague en France, comprend schématiquement trois cycles, à savoir :
- un premier cycle qui vise à décontaminer conjointement l'uranium et le plutonium vis-à-vis des produits de fission et des actinides mineurs, c'est-à-dire l'américium, le curium et le neptunium, à réaliser une partition de l'uranium et du plutonium en deux flux aqueux ; et
- deux cycles complémentaires, dénommés respectivement « *deuxième cycle uranium* » et *« deuxième cycle plutonium* » et qui visent à purifier séparément l'uranium et le plutonium après leur partition.

Récemment, une évolution importante du procédé PUREX, dénommée procédé COEX™ (pour **COEX**traction), a été proposée dans la demande internationale PCT publiée sous le numéro WO 2007/135178 (référence **[1]**).

En effet, tout en assurant une récupération et une purification de l'uranium et du plutonium comparables à celles obtenues dans le procédé PUREX, cette évolution permet de réduire considérablement les risques d'un détournement du plutonium à des fins militaires.

Elle permet aussi de produire un flux contenant un mélange de plutonium, d'uranium et, éventuellement, de neptunium purifiés, c'est-à-dire totalement décontaminés en produits de fission, et d'utiliser ce flux pour alimenter un atelier dit de *« co-conversion* » dont la fonction est de préparer un oxyde mixte (U, Pu) O₂ ou (U, Pu, Np) O₂ directement utilisable pour la fabrication de combustibles nucléaires de type MOX (pour **M**ixed **OX**ide Fuel).

Pour ce faire, le procédé COEX™ prévoit, après des opérations de décontamination de l'uranium et du plutonium analogues à celles mises en oeuvre dans le premier cycle du procédé PUREX, de réaliser la partition de l'uranium et du plutonium de sorte à obtenir un premier flux aqueux qui contient du plutonium, de l'uranium et, éventuellement, du neptunium, et un deuxième flux aqueux qui contient de l'uranium et, éventuellement, du neptunium mais qui ne contient pas de plutonium.

Il prévoit également de maintenir, dans toutes les opérations situées en aval de cette partition, le plutonium en présence d'uranium et, éventuellement, de neptunium jusqu'à l'obtention d'un oxyde mixte (U, Pu) O₂ ou (U, Pu, Nₚ) O₂.

Ainsi, dans le procédé COEX™, le *« deuxième cycle plutonium* » du procédé PUREX est remplacé par un cycle qui vise à purifier non plus du plutonium seul mais le mélange de plutonium, d'uranium et, le cas échéant, de neptunium qui est présent dans le premier flux aqueux issu de la partition.

Dans les procédés PUREX et COEX™, la partition de l'uranium et du plutonium en deux phases aqueuses est basée sur une opération de désextraction du plutonium qui est dite « *réductrice »* car elle consiste à désextraire le plutonium de la phase organique dans laquelle il se trouve en le réduisant totalement à l'état d'oxydation III, état dans lequel il est peu extractible par le phosphate de tri-n-butyle et passe donc facilement en phase aqueuse.

Pour ce faire, la phase organique contenant le plutonium(IV) est mise en contact avec une phase aqueuse nitrique qui contient un agent réducteur capable de réduire ce plutonium(IV) en plutonium(III), conjointement avec un agent antinitreux permettant de détruire l'acide nitreux qui tend à se former dans la phase aqueuse et de stabiliser ainsi à la fois l'agent réducteur et le plutonium(III).

Une opération de désextraction réductrice du plutonium est également effectuée au cours de l'étape qui vise à purifier le plutonium dans le procédé PUREX et le mélange de plutonium, d'uranium et, le cas échéant, de neptunium dans le procédé COEX™.

Ces opérations de désextraction réductrice du plutonium, qui associent une réaction de réduction à une extraction liquide-liquide, sont relativement complexes du fait de la mise en oeuvre de réactions redox. Elles nécessitent, en effet, l'introduction de quantités d'agents réducteurs et anti-nitreux qui peuvent être très importantes dans le cas du traitement de combustibles MOX à fortes teneurs en plutonium, ce qui impose des contraintes opératoires pour garantir la stabilité et la sûreté de ces opérations, au regard notamment de certains produits de réaction.

En outre, elles nécessitent d'être suivies d'opérations qui consistent à ré-oxyder le plutonium(III) en plutonium(IV) soit pour pouvoir l'extraire de nouveau dans une phase organique soit pour pouvoir l'entreposer le cas échéant en phase aqueuse puisque le plutonium n'est stable en milieu aqueux qu'à l'état d'oxydation IV, et qui compliquent le procédé.

Aussi, dans la perspective d'un développement de nouvelles usines de traitement de combustibles nucléaires usés, les Inventeurs se sont fixé pour but de fournir un procédé qui, tout en étant aussi performant que les procédés PUREX et COEX™ en termes de récupération et de décontamination de l'uranium et du plutonium, ne nécessite pas d'opération de désextraction réductrice du plutonium, notamment pour réaliser la partition de l'uranium et du plutonium.

Ils se sont également fixé pour but que ce procédé permette :
- soit de produire, comme le procédé COEX™, deux flux contenant l'un, un mélange de plutonium, d'uranium et, éventuellement, de neptunium purifiés et l'autre, de l'uranium purifié,
- soit de produire, comme le procédé PUREX, deux flux contenant l'un, du plutonium purifié et l'autre, de l'uranium purifié,
- soit encore de produire deux flux contenant l'un, un mélange de plutonium et de neptunium purifiés et l'autre, de l'uranium purifié.

Ils se sont encore fixé pour but que, dans le cas où ce procédé serait utilisé pour produire un flux contenant un mélange de plutonium, d'uranium et, éventuellement, de neptunium purifiés, il puisse offrir une très grande souplesse dans le réglage du rapport entre les quantités de plutonium et d'uranium présentes dans le flux ainsi produit.

Ils se sont en outre fixé pour but que ce procédé utilise, au moins en partie, les connaissances et le savoir-faire acquis pour le procédé PUREX, de manière à ce que son exploitation industrielle puisse être rendue possible à court ou moyen terme.

### EXPOSÉ DE L'INVENTION

Ces buts et d'autres encore sont atteints par l'invention qui propose un procédé de traitement d'un combustible nucléaire usé comprenant au moins les étapes suivantes :
a) la décontamination de l'uranium et du plutonium présents dans une phase aqueuse nitrique résultant de la dissolution de ce combustible dans de l'acide nitrique, vis-à-vis de l'américium, du curium et de la majeure partie des produits de fission se trouvant également dans cette phase, laquelle décontamination comprend au moins la co-extraction de l'uranium, à l'état d'oxydation VI, et du plutonium, à l'état d'oxydation IV, dans une phase organique non miscible à l'eau, contenant un premier extractant capable d'extraire davantage l'uranium(VI) et le plutonium(IV) que les actinides(III) et les produits de fission d'une phase aqueuse acide ;
b) la co-désextraction, dans une phase aqueuse nitrique, de l'uranium et du plutonium co-extraits à l'étape a), l'uranium étant désextrait à l'état d'oxydation VI et le plutonium étant désextrait aux états d'oxydation IV et VI par suite de la formation, au cours de cette co-désextraction, de plutonium(VI) par dismutation du plutonium(IV) ;
c) la partition de l'uranium et du plutonium présents dans la phase aqueuse nitrique issue de l'étape b) en une première phase aqueuse contenant soit du plutonium sans uranium soit un mélange d'uranium et de plutonium, et une deuxième phase aqueuse contenant de l'uranium sans plutonium, laquelle partition comprend au moins :
   - l'extraction sélective de tout ou partie de l'uranium, à l'état d'oxydation VI, dans une phase organique non miscible à l'eau, contenant un deuxième extractant qui est différent du premier extractant et qui est capable d'extraire davantage l'uranium(VI) que le plutonium(IV) d'une phase aqueuse acide, cette extraction étant réalisée après et/ou conjointement avec un traitement de la phase aqueuse nitrique issue de l'étape b) pour réduire le plutonium(VI) présent dans cette phase en plutonium(IV) ; et
   - la désextraction, dans une phase aqueuse nitrique, de l'uranium(VI) ainsi extrait ; et
d) la purification du plutonium ou du mélange d'uranium et de plutonium présent dans la phase aqueuse issue de l'extraction de l'étape c) vis-à-vis des produits de fission susceptibles d'être encore présents dans cette phase.

Ainsi, dans le procédé de l'invention, la partition de l'uranium et du plutonium en deux phases aqueuses est basée non pas sur une opération de désextraction réductrice du plutonium que renferme la phase organique issue de l'étape de décontamination, mais sur une extraction sélective de tout ou partie de l'uranium que renferme une phase aqueuse nitrique dans laquelle se trouvent l'uranium et le plutonium ayant été co-extraits à l'étape de décontamination.

Ceci est rendu possible par :
* d'une part, la mise en oeuvre, entre les étapes de décontamination et de partition, d'une étape, à savoir l'étape b) qui consiste à désextraire conjointement, dans une phase aqueuse nitrique, l'uranium et le plutonium présents dans la phase organique issue de l'étape de décontamination mais sans recourir à une quelconque réaction de réduction du plutonium présent dans cette phase ; et
* d'autre part, l'utilisation, à l'étape de partition, d'une phase organique contenant un extractant qui est capable d'extraire davantage l'uranium(VI) que le plutonium(IV) d'une phase aqueuse acide et qui permet ainsi de transférer dans cette phase organique tout ou partie de l'uranium initialement présent dans la phase aqueuse acide tout en laissant le plutonium(IV) dans cette phase.

Dans ce qui précède et ce qui suit, on considère qu'un extractant est capable d'extraire davantage l'uranium(VI) que le plutonium(IV) d'une phase aqueuse acide lorsque le coefficient de distribution de l'uranium(VI) obtenu lors d'une extraction réalisée avec cet extractant est supérieur au coefficient de distribution du plutonium(IV) obtenu lors de la même extraction et ce, quelles que soient les conditions opératoires dans lesquelles cette extraction est réalisée.

De manière similaire, on considère qu'un extractant est capable d'extraire davantage l'uranium(VI) et/ou le plutonium(IV) que l'américium, le curium et/ou les produits de fission d'une phase aqueuse acide lorsque les coefficients de distribution de l'uranium(VI) et/ou du plutonium(IV) obtenus lors d'une extraction réalisée avec cet extractant sont supérieurs aux coefficients de distribution de l'américium, du curium et/ou des produits de fission obtenus lors de la même extraction et ce, quelles que soient les conditions opératoires dans lesquelles cette extraction est réalisée.

A cet égard, on rappelle qu'en extraction liquide-liquide, le coefficient de distribution d'un élément métallique M, noté D_{M}, correspond au rapport de sa concentration en phase organique à sa concentration en phase aqueuse à l'équilibre, c'est-à-dire à [M]_{org}/ [M]_{aq}.

Le neptunium contenu dans le combustible nucléaire usé se retrouve dans la phase aqueuse nitrique résultant de la dissolution de ce combustible principalement aux états d'oxydation V et VI. Comptetenu de la similitude de comportement que présentent, en solutions aqueuses et organiques, l'uranium(VI) et le neptunium(VI), ce dernier est inévitablement extrait en phase organique par le premier extractant, ce qui a pour effet de déplacer l'équilibre redox existant entre les deux états d'oxydation V et VI du neptunium vers la formation de neptunium(VI). Il en résulte que la co-extraction de l'uranium et du plutonium de l'étape a) s'accompagne d'une extraction du neptunium sauf si l'on prend des dispositions pour que le neptunium soit à l'état d'oxydation V, pendant ou préalablement à cette opération de co-extraction, de manière à le rendre peu ou pas extractible par le premier extractant.

Par contre, l'équilibre redox existant entre les états d'oxydation V et VI du neptunium est inévitablement déplacé vers la formation de neptunium(V) par le traitement auquel on soumet la phase aqueuse issue de l'étape b) pour réduire le plutonium(VI) qu'elle contient en plutonium(IV), ce qui a pour effet de rendre le neptunium présent dans cette phase peu ou pas extractible par le deuxième extractant.

Ceci peut avantageusement être mis à profit pour obtenir, à l'issue de l'étape d), une phase aqueuse qui contient :
- soit un mélange de plutonium et d'uranium purifiés comprenant en outre du neptunium purifié ;
- soit un mélange de plutonium et d'uranium purifiés exempt de neptunium ;
- soit du plutonium purifié exempt d'uranium et de neptunium ;
- soit encore un mélange de plutonium et de neptunium purifiés exempt d'uranium.

Aussi, dans un premier mode de mise en oeuvre préféré du procédé de l'invention, celui-ci comprend au moins les étapes suivantes :
a) la décontamination de l'uranium, du plutonium et du neptunium présents dans la phase aqueuse nitrique résultant de la dissolution du combustible vis-à-vis de l'américium, du curium et de la majeure partie des produits de fission se trouvant également dans cette phase, laquelle décontamination comprend au moins la co-extraction de l'uranium(VI), du plutonium(IV) et du neptunium, à l'état d'oxydation VI, dans la phase organique contenant le premier extractant ;
b) la co-désextraction, dans une phase aqueuse nitrique, de l'uranium, du plutonium et du neptunium co-extraits à l'étape a), l'uranium étant désextrait à l'oxydation VI, le plutonium étant désextrait aux états d'oxydation IV et VI et le neptunium étant désextrait aux états d'oxydation V et VI ;
c) la partition de l'uranium, du plutonium et du neptunium présents dans la phase aqueuse nitrique issue de l'étape b) en une première phase aqueuse contenant un mélange d'uranium, de plutonium et de neptunium et une deuxième phase aqueuse contenant de l'uranium sans plutonium ni neptunium, laquelle partition comprend au moins :
   - l'extraction sélective d'une fraction de l'uranium, à l'état d'oxydation VI, dans la phase organique contenant le deuxième extractant, cette extraction étant réalisée après un traitement de la phase aqueuse nitrique issue de l'étape b) pour réduire le plutonium(VI) présent dans cette phase en plutonium(IV) ; et
   - la désextraction, dans une phase aqueuse nitrique, de l'uranium(VI) ainsi extrait ; et
d) la purification du mélange d'uranium, de plutonium et de neptunium présent dans la phase aqueuse issue de l'extraction de l'étape c) vis-à-vis des produits de fission susceptibles d'être encore présents dans cette phase.

Auquel cas, l'étape d) comprend, de préférence, au moins :
- l'extraction du mélange d'uranium, de plutonium et de neptunium présent dans la phase aqueuse issue de l'extraction de l'étape c), respectivement aux états d'oxydation VI, IV et VI, dans une phase organique non miscible à l'eau, contenant un troisième extractant qui est différent du deuxième extractant et qui est capable d'extraire davantage l'uranium(VI) et le plutonium(IV) que les produits de fission d'une phase aqueuse acide ; et
- la désextraction, dans une phase aqueuse nitrique du mélange d'uranium(VI), de plutonium(IV) et de neptunium(VI) ainsi extrait.

Pour ce faire, le procédé de l'invention comprend avantageusement, au cours de l'extraction de l'étape d), le traitement de la phase aqueuse nitrique issue de l'extraction de l'étape c) pour déplacer l'équilibre redox existant entre les états d'oxydation V et VI du neptunium vers la formation de neptunium(VI) et faciliter ainsi l'extraction du neptunium par le troisième extractant.

Dans un deuxième mode de mise en oeuvre préféré du procédé de l'invention, celui-ci comprend au moins les étapes suivantes :
a) la décontamination de l'uranium et du plutonium présents dans la phase aqueuse nitrique résultant de la dissolution du combustible vis-à-vis du neptunium, de l'américium, du curium et de la majeure partie des produits de fission se trouvant également dans cette phase, laquelle décontamination comprend au moins la co-extraction de l'uranium(VI) et du plutonium(IV) dans la phase organique contenant le premier extractant, cette co-extraction étant réalisée après et/ou conjointement avec un traitement de ladite phase aqueuse nitrique pour déplacer l'équilibre redox existant entre les états d'oxydation V et VI du neptunium vers la formation de neptunium(V) ;
b) la co-désextraction, dans une phase aqueuse nitrique, de l'uranium et du plutonium co-extraits à l'étape a), l'uranium étant désextrait à l'oxydation VI et le plutonium étant désextrait aux états d'oxydation IV et VI ;
c) la partition de l'uranium et du plutonium présents dans la phase aqueuse nitrique issue de l'étape b) en une première phase aqueuse contenant un mélange d'uranium et de plutonium et une deuxième phase aqueuse contenant de l'uranium sans plutonium, laquelle partition comprend au moins :
   - l'extraction sélective d'une fraction de l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
   - la désextraction, dans une phase aqueuse nitrique, de l'uranium(VI) ainsi extrait ; et
d) la purification du mélange d'uranium et de plutonium présent dans la phase aqueuse issue de l'extraction de l'étape c) vis-à-vis des produits de fission susceptibles d'être encore présents dans cette phase.

Auquel cas, l'étape d) comprend, de préférence, au moins :
- l'extraction du mélange d'uranium et de plutonium présent dans la phase aqueuse issue de l'extraction de l'étape c), respectivement aux états d'oxydation VI et IV, dans une phase organique non miscible à l'eau, contenant un troisième extractant qui est différent du deuxième extractant et qui est capable d'extraire davantage l'uranium(VI) et le plutonium(IV) que les produits de fission d'une phase aqueuse acide ; et
- la désextraction, dans une phase aqueuse nitrique du mélange d'uranium(VI) et de plutonium(IV) ainsi extrait.

Dans un troisième mode de mise en oeuvre préféré du procédé de l'invention, celui-ci comprend au moins les étapes suivantes :
a) la décontamination de l'uranium et du plutonium présents dans la phase aqueuse nitrique résultant de la dissolution du combustible vis-à-vis du neptunium, de l'américium, du curium et de la majeure partie des produits de fission se trouvant également dans cette phase, laquelle décontamination comprend au moins la co-extraction de l'uranium(VI) et du plutonium(IV) dans la phase organique contenant le premier extractant, cette co-extraction étant réalisée après et/ou conjointement avec un traitement de ladite phase aqueuse nitrique pour déplacer l'équilibre redox existant entre les états d'oxydation V et VI du neptunium vers la formation de neptunium(V) ;
b) la co-désextraction, dans une phase aqueuse nitrique, de l'uranium et du plutonium co-extraits à l'étape a), l'uranium étant désextrait à l'oxydation VI et le plutonium étant désextrait aux états d'oxydation IV et VI ;
c) la partition de l'uranium et du plutonium présents dans la phase aqueuse nitrique issue de l'étape b) en une première phase aqueuse contenant du plutonium sans uranium et une deuxième phase aqueuse contenant de l'uranium sans plutonium, laquelle partition comprend au moins :
   - l'extraction sélective de tout l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
   - la désextraction, dans une phase aqueuse nitrique, de l'uranium(VI) ainsi extrait ; et
d) la purification du plutonium présent dans la phase aqueuse issue de l'extraction de l'étape c) vis-à-vis des produits de fission susceptibles d'être encore présents dans cette phase.

Auquel cas, l'étape d) comprend, de préférence, au moins :
- l'extraction du plutonium présent dans la phase aqueuse issue de l'extraction de l'étape c), à l'état d'oxydation IV, dans une phase organique non miscible à l'eau, contenant un troisième extractant qui est différent du deuxième extractant et qui est capable d'extraire davantage le plutonium(IV) que les produits de fission d'une phase aqueuse acide ; et
- la désextraction, dans une phase aqueuse nitrique du plutonium(IV) ainsi extrait.

Dans un quatrième mode de mise en oeuvre préféré du procédé de l'invention, celui-ci comprend au moins les étapes suivantes :
a) la décontamination de l'uranium, du plutonium et du neptunium présents dans la phase aqueuse nitrique résultant de la dissolution du combustible vis-à-vis de l'américium, du curium et de la majeure partie des produits de fission se trouvant également dans cette phase, laquelle décontamination comprend au moins la co-extraction de l'uranium(VI), du plutonium(IV) et du neptunium, à l'état d'oxydation VI, dans la phase organique contenant le premier extractant ;
b) la co-désextraction, dans une phase aqueuse nitrique, de l'uranium, du plutonium et du neptunium co-extraits à l'étape a), l'uranium étant désextrait à l'oxydation VI, le plutonium étant désextrait aux états d'oxydation IV et VI et le neptunium étant désextrait aux états d'oxydation V et VI ;
c) la partition de l'uranium, du plutonium et du neptunium présents dans la phase aqueuse nitrique issue de l'étape b) en une première phase aqueuse contenant un mélange de plutonium et de neptunium sans uranium et une deuxième phase aqueuse contenant de l'uranium sans plutonium ni neptunium, laquelle partition comprend au moins :
   - l'extraction sélective de tout l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
   - la désextraction, dans une phase aqueuse nitrique, de l'uranium(VI) ainsi extrait ; et
d) la purification du mélange de plutonium et de neptunium présent dans la phase aqueuse issue de l'extraction de l'étape c) vis-à-vis des produits de fission susceptibles d'être encore présents dans cette phase.

Auquel cas, l'étape d) comprend, de préférence, au moins :
- l'extraction du mélange de plutonium et de neptunium présent dans la phase aqueuse issue de l'extraction de l'étape c), respectivement aux états d'oxydation IV et VI, dans une phase organique non miscible à l'eau, contenant un troisième extractant qui est différent du deuxième extractant et qui est capable d'extraire davantage le plutonium(IV) que les produits de fission d'une phase aqueuse acide ; et
- la désextraction, dans une phase aqueuse nitrique du mélange de plutonium(IV) et de neptunium(VI) ainsi extrait.

Pour ce faire, le procédé de l'invention comprend avantageusement, au cours de l'extraction de l'étape d), le traitement de la phase aqueuse nitrique issue de l'extraction de l'étape c) pour déplacer l'équilibre redox existant entre les états d'oxydation V et VI du neptunium vers la formation de neptunium (VI).

Quel que soit le mode de mise en oeuvre du procédé selon l'invention, on utilise, de préférence, le même extractant comme premier et troisième extractants, de manière à simplifier la gestion des effluents organiques produits par cette mise en oeuvre.

Cet extractant est, de préférence, un phosphate de trialkyle et, mieux encore, le phosphate de tri-n-butyle (ou TBP) que l'on utilise typiquement à hauteur de 30% (v/v) dans un diluant organique du type mélange d'hydrocarbures, notamment du tétrapropylène hydrogéné (ou TPH), comme dans le procédé PUREX.

Toutefois, il est également possible d'utiliser deux extractants différents et de choisir l'un et/ou l'autre de ces extractants parmi les extractants de la famille des N,N-dialkylamides de formule générale RC(O)N(R')₂, dans laquelle R représente un groupe alkyle ramifié en position β du groupe carbonyle comme, par exemple, le N,N-di(2-éthylhexyl)-n-butanamide (ou DEHBA) ou le N,N-di-(2-éthylhexyl)-3,3-diméthylbutanamide (ou DEHDMBA).

Le deuxième extractant est, lui, de préférence, choisi parmi les N,N-dialkylamides de même formule que précédemment mais dans laquelle R représente un groupe alkyle ramifié en position α du groupe carbonyle comme, par exemple, le N,N-di-(2-éthylhexyl)isobutanamide (ou DEHiBA) ou le N,N-di-(2-éthylhexyl)-2,2-diméthylpropanamide (ou DEHDMPA), qui sont connus pour être plus affines pour l'uranium(VI) que pour le plutonium(IV).

Toutefois, là également, il est possible de choisir le deuxième extractant parmi les phosphates de trialkyle qui présentent des groupes alkyles ramifiés comme, par exemple, le phosphate de tri-tert-butyle.

Parmi les N,N-dialkylamides, on préfère tout spécialement le DEHiBA dont la sélectivité vis-à-vis de l'uranium(VI) est particulièrement bonne puisque, à titre d'exemple, les coefficients de distribution D_{U(VI)} et D_{Pu(IV)} obtenus avec cet extractant sont respectivement de 2,7 et de 0,03 (soit un facteur de séparation d'environ 90) en présence d'un milieu nitrique 3 M, et que l'on utilise préférentiellement à une concentration allant de 0,5 à 2 moles/L et, mieux encore de 1 à 1,5 mole/L, dans un diluant organique.

Ce dernier peut être indifféremment choisi parmi les nombreux diluants organiques polaires ou aliphatiques dont l'utilisation a été proposée pour le traitement de combustibles nucléaires irradiés comme le toluène, le xylène, le t-butylbenzène, le triisopropylbenzène, le kérosène, les dodécanes (n-dodécane, tétrapropylène hydrogéné, ...), les isoparaffines (Isane IP 185 par exemple), le métanitrobenzotrifluorure et le 5,5'-[oxy-bis-(méthylèneoxy)]bis-(1,1,2,2,3,3,4,4-octafluoropentane).

Toutefois, là également, pour des questions de simplification de mise en oeuvre du procédé de l'invention, il s'agit, de préférence, du même diluant que celui utilisé pour les premier et troisième extractants et, donc, d'un mélange d'hydrocarbures tel que le TPH si du TBP est utilisé en tant que premier et troisième extractants.

Par ailleurs, quel que soit le mode de mise en oeuvre du procédé selon l'invention, le traitement que l'on applique à la phase aqueuse nitrique issue de l'étape b) pour réduire le plutonium(VI) en plutonium(IV) comprend, de préférence, l'apport d'acide nitreux à cette phase, par exemple par injection de vapeurs nitreuses.

De manière similaire, les traitements que l'on met en oeuvre pour contrôler l'état d'oxydation du neptunium dans les différents modes de mise en oeuvre du procédé précédemment exposés comprennent avantageusement un apport d'acide nitreux judicieusement choisi, par exemple par injection de vapeurs nitreuses.

Ainsi, dans les premier et quatrième modes de mise en oeuvre du procédé - dans lesquels on souhaite obtenir, à l'issue de l'étape d), un mélange contenant du neptunium, conjointement avec de l'uranium et du plutonium ou seulement avec du plutonium -, l'apport d'acide nitreux en quantité appropriée, typiquement de l'ordre de 10⁻⁴ à 10⁻³ M, au cours de l'opération d'extraction de l'étape d) permet de déplacer l'équilibre redox existant entre les états d'oxydation V et VI du neptunium vers la formation de neptunium(VI) et de favoriser ainsi son extraction par le troisième extractant. Cet apport n'est pas nécessaire au niveau de la co-extraction de l'étape a), l'expérience ayant, en effet, montré qu'à ce stade du procédé, de l'acide nitreux est présent en quantité suffisante en raison de la forte activité des solutions aqueuses nitriques traitées.

Dans les second et troisième modes de mise en oeuvre du procédé - dans lesquels on souhaite, au contraire, obtenir, à l'issue de l'étape d), un mélange d'uranium et de plutonium ou du plutonium seul, exempt de neptunium, l'apport d'acide nitreux en quantité suffisante, typiquement de l'ordre de 0,01 à 0,1 M, avant que ne commence la co-extraction de l'étape a) et/ou au cours de cette co-extraction permet de déplacer l'équilibre redox existant entre les états d'oxydation V et VI du neptunium vers la formation de neptunium(V), non extractible par le premier extractant.

Avantageusement, le procédé de l'invention comprend, de plus, une opération de concentration de la phase aqueuse nitrique issue de l'étape b) et/ou une opération de concentration de la phase aqueuse nitrique issue de l'étape l'extraction de l'étape c) et ce, de manière à réduire le volume des phases organiques nécessaire à la réalisation des étapes c) et d).

D'autres avantages et caractéristiques du procédé de l'invention ressortiront de la lecture du complément de description qui suit et qui se réfère à des exemples de modes de mise en oeuvre à une échelle industrielle de ce procédé.

Bien entendu, ces exemples ne sont donnés qu'à titre d'illustrations de l'invention et n'en constituent en aucun cas une limitation.

### BRÈVE DESCRIPTION DES DESSINS

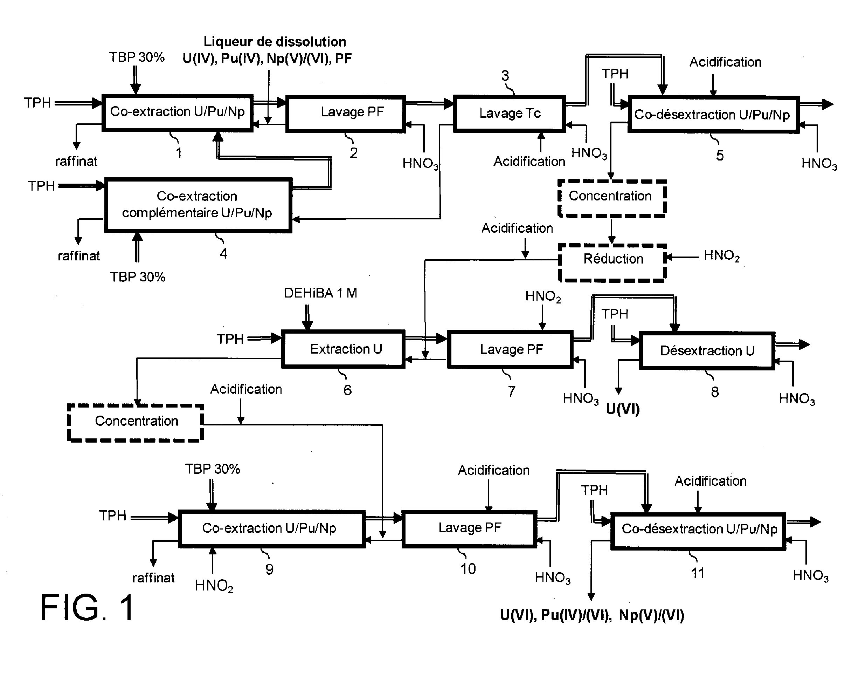

La figure 1 représente un schéma de principe d'un mode de mise en oeuvre préféré du procédé de l'invention, conçu pour produire, d'une part, un mélange d'uranium, de plutonium et de neptunium apte à être converti en un oxyde mixte (U,Pu,Np)O₂ et, d'autre part, de l'uranium d'une pureté suffisante pour pouvoir être converti en UO₂.

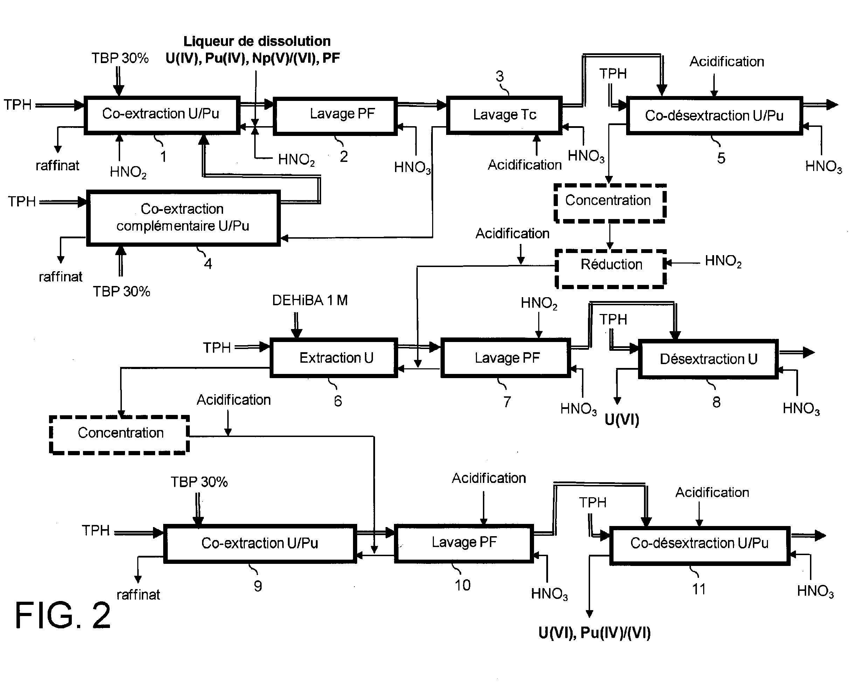

La figure 2 représente un schéma de principe d'une première variante du mode de mise en oeuvre illustré sur la figure 1, conçue pour produire, d'une part, un mélange d'uranium et de plutonium apte à être converti en un oxyde mixte (U,Pu)O₂ et, d'autre part, de l'uranium d'une pureté suffisante pour pouvoir être converti en UO₂.

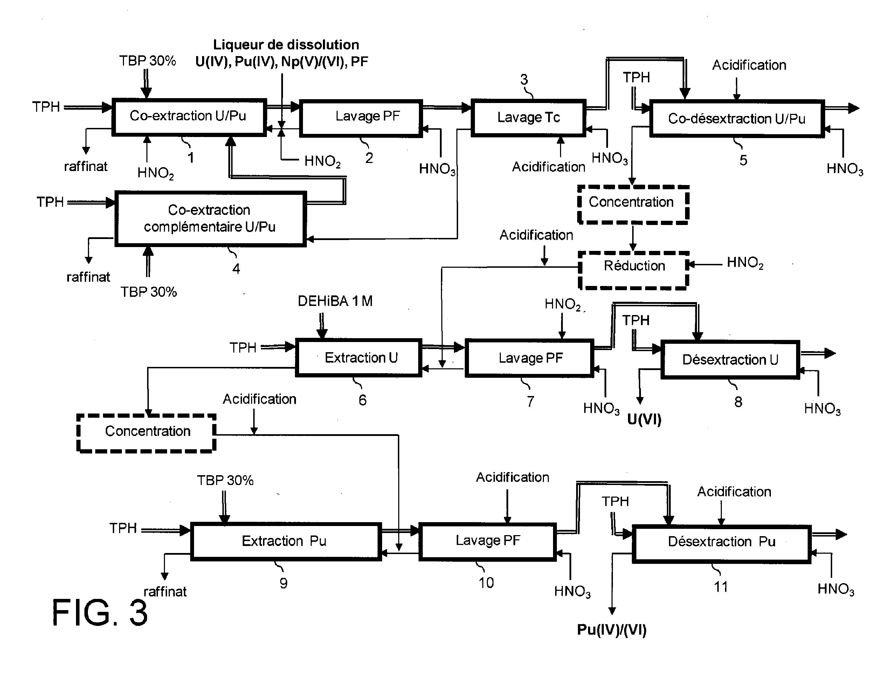

La figure 3 représente un schéma de principe d'une deuxième variante du mode de mise en oeuvre illustré sur la figure 1, conçue pour produire, d'une part, du plutonium apte à être converti en PuO₂ et, d'autre part, de l'uranium d'une pureté suffisante pour pouvoir être converti en UO₂.

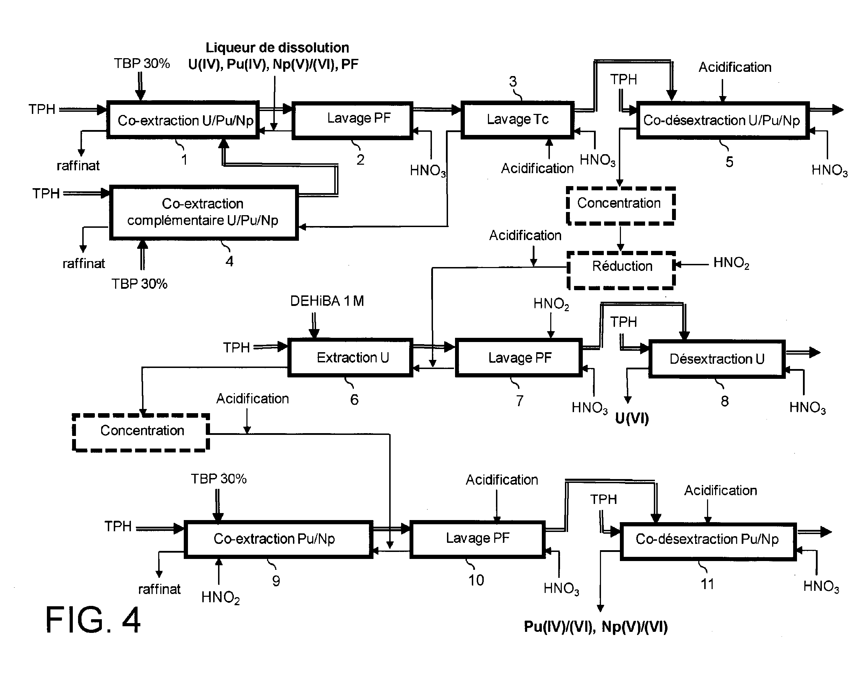

La figure 4 représente un schéma de principe d'une troisième variante du mode de mise en oeuvre illustré sur la figure 1, conçue pour produire, d'une part, un mélange de plutonium et de neptunium apte à être converti en (Pu,Np)O₂ et, d'autre part, de l'uranium d'une pureté suffisante pour pouvoir être converti en UO₂.

Sur ces figures, les rectangles référencés 1 à 11 représentent des extracteurs multiétagés tels que ceux classiquement utilisés dans le traitement des combustibles nucléaires usés (mélangeurs-décanteurs, colonnes pulsées, extracteurs centrifuges).

Les phases organiques entrant et sortant de ces extracteurs sont symbolisées par des doubles traits, tandis que les phases aqueuses entrant et sortant de ces extracteurs sont symbolisées par des simples traits.

### EXPOSÉ DÉTAILLÉ DE MODES DE MISE EN OEUVRE PARTICULIERS

On se réfère tout d'abord à la figure 1 qui représente un schéma de principe d'un mode de mise en oeuvre préféré du procédé de l'invention, conçu pour produire à partir d'une liqueur de dissolution d'un combustible nucléaire usé, par exemple d'UO₂, d'une part, un mélange d'uranium, de plutonium et de neptunium apte à être converti en un oxyde mixte (U, Pu, Np) O₂, et, d'autre part, de l'uranium apte être converti en UO₂.

Cette liqueur de dissolution, qui est obtenue par dissolution du combustible nucléaire usé dans de l'acide nitrique concentré (6 à 10 M) et clarification du mélange résultant, contient typiquement de 200 à 300 g/L d'uranium pour 2 à 3 g/L de plutonium.

Elle contient également des actinides mineurs dont le neptunium, l'américium et le curium, ainsi que des produits de fission (lanthane, cérium, praséodyme, néodyme, samarium, europium, l'yttrium, molybdène, zirconium, rubidium, ruthénium, palladium, strontium, etc).

Dans ce mode de mise en oeuvre, le procédé de l'invention a, pour première étape, une étape qui vise à décontaminer l'uranium, le plutonium et le neptunium vis-à-vis des actinides(III) (américium et curium) et de la majeure partie des produits de fission, et que l'on réalise, de préférence, de la même façon que l'étape de décontamination du procédé PUREX tel qu'il est mis en oeuvre dans l'usine UP2-800 de la Hague.

Cette étape comprend donc, après un éventuel ajustement de l'acidité de la liqueur de dissolution pour amener cette acidité à une valeur de 4 à 6 M :
* une opération, dénommée « *co-extraction U*/*Pu*/*Np* », qui vise à extraire conjointement l'uranium, le plutonium et le neptunium, le premier à l'état d'oxydation VI, le second à l'état d'oxydation IV et le troisième à l'état d'oxydation VI, de la liqueur de dissolution, par mise en contact de cette liqueur avec une phase organique contenant 30% (v/v) de TBP dans un diluant organique, par exemple du TPH, et au cours de laquelle l'équilibre redox existant entre les états d'oxydation V et VI du neptunium en phase aqueuse est déplacé vers la formation du neptunium(VI) en raison de l'extraction de ce dernier par la phase organique, ce qui conduit à une extraction du neptunium qui peut être quantitative si la cinétique de la réaction d'oxydation du neptunium(V) est suffisamment rapide ;
* une opération, dénommée *« lavage PF »,* qui vise à retirer de la phase organique issue de l'opération « *co-extraction U*/*Pu*/*Np* » des produits de fission et, en particulier, le ruthénium et le zirconium, ayant été extraits au cours de cette co-extraction, par mise en contact de cette phase organique avec une phase aqueuse nitrique d'acidité modérée, par exemple une solution aqueuse d'acide nitrique 0,5 à 3 M ;

* une opération, dénommée *« lavage Tc »,* qui vise à retirer de la phase organique issue du *« lavage PF »* le technétium ayant été extrait au cours de la *« co-extraction U*/*Pu*/*Np* », par mise en contact de cette phase organique avec une phase aqueuse nitrique d'acidité élevée, par exemple une solution d'acide nitrique 4 à 5 M ; et
* une opération, dénommée « *co-extraction complémentaire U*/*Pu*/*Np* », qui vise à récupérer en phase organique les fractions d'uranium, de plutonium et de neptunium ayant suivi le technétium en phase aqueuse au cours du « *lavage Tc* », par mise en contact de cette phase aqueuse avec une phase organique qui est également constituée de 30% (v/v) de TBP dans du TPH.

On obtient ainsi quatre phases :
- les deux phases aqueuses (ou raffinats) issues de la *« co-extraction U*/*Pu*/*Np* » et de la « *co-extraction complémentaire U*/*Pu*/*Np* », qui sont chargées l'une en actinides(III) et divers produits de fission et l'autre en technétium, et qui sont éliminées du cycle ;
- la phase organique issue de la *« co-extraction complémentaire U*/*Pu*/*Np »,* qui est envoyée vers l'extracteur 1 pour être ajoutée à la phase organique circulant dans cet extracteur ; et
- la phase organique issue du « *lavage Tc* », qui contient de l'uranium(VI), du plutonium(IV), du neptunium(VI), ainsi que des produits de fission à l'état de traces.

Cette dernière phase organique est dirigée vers l'extracteur 5 dans lequel est réalisée la deuxième étape du procédé.

Cette deuxième étape, qui est dénommée « *co-désextraction U*/*Pu*/*Np* » sur la figure 1, vise à désextraire conjointement l'uranium, le plutonium et le neptunium de la phase organique issue du « *lavage Tc* » sans recourir à une quelconque réaction de réduction du plutonium.

Elle est donc réalisée en mettant cette phase organique en contact avec une phase aqueuse nitrique qui présente une très faible acidité à son entrée dans l'extracteur 5, par exemple de 0,01 à 0,05 M, mais dont l'acidité est augmentée en cours d'opération, par exemple par addition d'acide nitrique 12 M, de sorte à ce que cette acidité soit de l'ordre de 0,3 à 0,6 M en sortie d'extracteur 5, et ce, pour éviter que l'hydrolyse du plutonium.

Cette phase aqueuse peut être chauffée, par exemple à une température de l'ordre de 50°C, pour réduire l'extractibilité de l'uranium, du plutonium et du neptunium par le TBP et favoriser ainsi le transfert de ces éléments en phase aqueuse.

A l'issue de cette étape, on obtient donc :
- une phase organique qui ne contient plus ni uranium ni plutonium ni neptunium ni produits de fission et qui est dirigée vers une série d'extracteurs (non représentés sur la figure 1) dans lesquels elle sera soumise à un traitement de purification en vue de son recyclage ; et
- une phase aqueuse qui contient de l'uranium(VI), du plutonium qui est majoritairement à l'état d'oxydation IV mais dont une fraction se trouve à l'état d'oxydation VI - en raison de la tendance que présente le plutonium(IV) à dismuter en milieu aqueux et ce, d'autant plus facilement que ce milieu est chauffé et faiblement acide -, du neptunium(V), du neptunium(VI) ainsi que des produits de fission à l'état de traces.

Cette phase aqueuse est alors concentrée pour en réduire le volume, par exemple par évaporation.

Puis, elle est soumise à une opération de réduction, par exemple par un apport d'acide nitreux (HNO₂) dans la cuve dans laquelle elle se trouve, avant d'être dirigée vers les extracteurs 6 à 8 dans lesquels se déroule la troisième étape du procédé, à savoir l'étape de partition.

L'apport d'acide nitreux, que l'on réalise par exemple par injection de vapeurs nitreuses, permet de réduire le plutonium(VI) en plutonium(IV) et de déplacer l'équilibre redox existant entre les états d'oxydation V et VI du neptunium vers la formation de neptunium(V), ce qui a pour effet de diminuer l'extractibilité du plutonium et du neptunium par le DEHiBA, qui est l'extractant choisi pour réaliser l'étape de partition, et d'éviter ainsi qu'ils ne suivent l'uranium au cours de cette étape de partition.

Comme visible sur la figure 1, l'étape de partition comprend, après un éventuel ajustement de l'acidité de la phase aqueuse issue de l'opération de réduction pour amener cette acidité à une valeur de 4 à 6 M :
* une opération, dénommée *« extraction U* », qui vise à extraire de cette phase aqueuse une fraction de l'uranium(VI) qu'elle contient, par mise en contact avec une phase organique contenant, par exemple, de 0,5 à 2 moles/L de DEHiBA dans un dodécane tel que le TPH ;
* une opération, dénommée *« lavage PF »,* qui vise à retirer de la phase organique les produits de fission et les fractions de plutonium et de neptunium ayant été extraits au cours de l'« *extraction U* », par mise en contact de cette phase organique avec une phase aqueuse nitrique d'acidité modérée, par exemple de 0,5 à 3 M, et qui comprend, par précaution, un apport d'acide nitreux propre à réduire le neptunium(VI), qui est susceptible d'être présent dans la phase organique du fait d'une éventuel déplacement de l'équilibre redox existant entre les états d'oxydation V et VI du neptunium, en neptunium(V) ; et
* une opération, dénommée « *désextraction* U », qui vise à désextraire l'uranium présent dans la phase organique issue du « *lavage PF »,* par mise en contact de cette phase organique avec une phase aqueuse nitrique de faible acidité, par exemple une solution d'acide nitrique 0,01 à 0,03 M.

Là également, cette phase aqueuse peut être chauffée, par exemple à une température de l'ordre de 50°C, pour réduire l'extractibilité de l'uranium par le DEHiBA et favoriser ainsi son transfert en phase aqueuse.

On obtient ainsi trois phases :
- la phase organique issue de la *« désextraction U* », qui ne contient plus ni uranium ni plutonium ni neptunium ni produits de fission et qui est dirigée vers une série d'extracteurs (non représentés sur la figure 1) dans lesquels elle sera soumise à un traitement de purification en vue de son recyclage ;
- la phase aqueuse issue de la *« désextraction U* », qui contient de l'uranium(VI) dont le degré de pureté est suffisant pour qu'il puisse être considéré comme un produit fini, apte à être converti en oxyde d'uranium sans opération complémentaire de purification, et qui sort donc du cycle ; et
- la phase aqueuse issue de l'« *extraction U* », qui contient de l'uranium (VI), du plutonium(IV) et du neptunium(V) ainsi que des produits de fission à l'état de traces.

Cette phase aqueuse est alors concentrée pour en réduire le volume, par exemple par évaporation.

A l'issue de cette concentration, cette phase aqueuse contient de l'uranium(VI), du plutonium qui est majoritairement à l'état d'oxydation IV mais dont une partie se trouve à l'état d'oxydation VI en raison de la tendance que présente le plutonium(IV) à dismuter en phase aqueuse, du neptunium(V) et du neptunium (VI).

Après une éventuelle acidification pour amener son acidité à une valeur de 4 à 5 M, elle est dirigée vers les extracteurs 9 à 11 dans lesquels se déroule la quatrième étape du procédé, à savoir l'étape de purification.

Comme visible sur la figure 1, cette étape de purification comprend :
* une opération, dénommée « *co-extraction U*/*Pu*/*Np* », qui vise à extraire conjointement l'uranium(VI), le plutonium(IV), le plutonium(VI) et le neptunium de la phase aqueuse issue de l'opération de concentration, qui est réalisée en mettant cette phase aqueuse en contact avec une phase organique contenant 30% (v/v) de TBP dans du TPH, et au cours de laquelle le neptunium est extrait quantitativement sous la forme de neptunium(VI) selon les mêmes mécanismes que ceux mis en jeu dans la « *co-extraction U*/*Pu*/*Np* » de l'étape de décontamination mais avec un apport d'acide nitreux (par exemple, par injection de vapeur nitreuses dans l'extracteur 9) en une quantité permettant de catalyser l'oxydation du neptunium(V) en neptunium(VI) ;
* une opération, dénommée *« lavage PF »,* qui vise à retirer de la phase organique les produits de fission ayant été extraits au cours de la « *co-extraction U*/*Pu*/*Np »,* par mise en contact de cette phase organique avec une phase aqueuse nitrique qui présente une acidité modérée à son entrée dans l'extracteur 10, par exemple une solution d'acide nitrique 1 à 3 M, mais dont l'acidité est augmentée en cours d'opération, par exemple par addition d'acide nitrique 12 M, de sorte à être de 3 à 5 M en sortie d'extracteur 10 ; et
* une opération, dénommée « co-*désextraction U*/*Pu*/*Np* », qui vise à désextraire conjointement l'uranium, le plutonium et le neptunium de la phase organique issue du « *lavage PF* », là également sans recourir à une quelconque réaction de réduction du plutonium et qui est donc réalisée par mise en contact de cette phase organique avec une phase aqueuse présentant une très faible acidité à son entrée dans l'extracteur 11, par exemple de 0,01 à 0,05 M, et dont l'acidité est augmentée en cours d'opération, par exemple par addition d'acide nitrique 12 M, de sorte à ce que cette acidité soit de l'ordre de 0,3 à 0,5 M en sortie d'extracteur 11.

Comme précédemment, cette phase aqueuse peut être chauffée, par exemple à une température de l'ordre de 50°C, pour réduire l'extractibilité de l'uranium et du plutonium par le TBP.

On obtient ainsi trois phases :
- la phase aqueuse issue de la *« co-extraction U*/*Pu*/*Np* » (ou raffinat), qui contient des produits de fission et qui est éliminée du cycle ;
- la phase organique issue de la *« co-désextraction U*/*Pu*/*Np* », qui ne contient plus ni uranium ni plutonium ni neptunium ni produits de fission et qui est dirigée vers la série d'extracteurs dévolus à la purification des phases organiques contenant du TBP ; et
- la phase aqueuse issue de la *« co-désextraction U*/*Pu*/*Np* », qui contient un mélange d'uranium(VI), de plutonium(IV), de plutonium(VI), de neptunium(V) et de neptunium(VI), dont le degré de pureté est suffisant pour que cette phase puisse être envoyée, après un éventuel ajustement de sa teneur en uranium(VI) par ajout de nitrate d'uranyle et/ou un éventuel entreposage, vers un atelier propre à convertir ce mélange en un oxyde mixte (U,Pu,Np)O₂.

Pour des questions de sûreté d'exploitation du procédé de l'invention, il est préférable de garantir l'absence d'entraînement de plutonium dans les phases organiques issues des opérations « co-*désextraction U*/*Pu*/*Np* » se déroulant respectivement dans les extracteurs 5 et 11.

Pour ce faire, il est possible de compléter chacune de ces opérations de co-désextraction par une opération (non représentée sur la figure 1) qui consiste à retirer de ces phases organiques les éventuelles traces de plutonium qu'elles contiennent, qui correspondent le plus souvent à des complexes formés de plutonium et de produits de dégradation du TBP tels que le phosphate de di-n-butyle.

Auquel cas, cette opération peut consister :
- soit à mettre les phases organiques issues des opérations « *co-désextraction U*/*Pu*/*Np* » précitées en contact avec une phase aqueuse nitrique d'acidité faible à modérée, par exemple une solution d'acide nitrique 0,05 à 2 M, qui contient un agent capable de réduire le plutonium(IV) en plutonium(III) comme, par exemple le nitrate uraneux, ainsi qu'un agent antinitreux comme, par exemple, l'hydrazine ;
- soit à mettre ces phases organiques en contact avec une phase aqueuse nitrique, également d'acidité faible à modérée mais contenant un hétéropolyanion lacunaire et, en particulier, un hétérotungstate du type P₂W₁₇O₆₁¹⁰⁻, As₂W₁₇O₆₁¹⁰⁻, SiW₁₁O₃₉⁸⁻, GeW₁₁O₃₉⁸⁻ ou PW₁₁O₃₉⁷⁻ comme décrit dans la demande internationale PCT publiée sous le numéro WO 2005/ 052950 (référence **[2]**).

Notons, par ailleurs, que ce type d'opération permet, le cas échéant, également la décontamination de la phase organique en neptunium.

Il n'y a normalement pas lieu de prévoir des dispositions similaires au cours de l'étape de partition sauf si cette étape est réalisée en utilisant un phosphate de trialkyle comme extractant, auquel cas une opération analogue à celle qui vient d'être décrite sera avantageusement réalisée à la fois en aval du *« lavage PF* » de cette étape et en amont de la *« désextraction U »* (les termes « *aval »* et « *amont* » étant considérés ici par rapport au sens de circulation de la phase organique) afin de garantir l'absence de traces de plutonium et de neptunium dans la phase aqueuse issue de cette « *désextraction U ».*

Il est à noter que, lorsqu'un agent réducteur tel que le nitrate uraneux est utilisé dans des opérations qui visent uniquement à empêcher que du plutonium à l'état de traces ne soit entraîné dans une phase, les flux d'agent réducteur utilisés dans ces opérations sont sans commune mesure avec ceux qui sont nécessaires pour désextraire le plutonium en phase aqueuse dans le premier et le deuxième cycle du procédé PUREX ou qui seraient nécessaires pour réaliser ces désextractions dans le cadre du procédé COEX™. Ils ne génèrent donc pas les contraintes précédemment exposées à propos de ces procédés.

Par ailleurs, pour assurer une stabilité de fonctionnement du procédé de l'invention, il est également préférable d'éviter que n'ait lieu un transport d'extractant entre les étapes de ce procédé qui n'utilisent pas le même extradant, c'est-à-dire entre les deuxième et troisième étapes d'une part, et entre les troisième et quatrième étapes d'autre part.

Pour ce faire, il est possible de prévoir :
* une opération de lavage (représentée sur la figure 1) de la phase aqueuse issue de l'étape « *co-désextraction U*/*Pu*/*Np* » se déroulant dans l'extracteur 5 par du TPH avant que cette phase aqueuse ne soit concentrée, afin d'extraire en phase organique l'extractant présent en phase aqueuse ; et
* une opération de lavage (représentée sur la figure 1) de la phase aqueuse issue de *l'« extraction U* » se déroulant dans l'extracteur 6 par du TPH avant que cette phase aqueuse ne soit concentrée ;
sachant que, dans les deux cas, le fait de concentrer ensuite la phase aqueuse ainsi lavée permet d'éliminer par entraînement à la vapeur, voire de détruire les éventuelles traces résiduelles d'extractant.

Sur la figure 1, ces lavages au TPH sont représentés par une introduction de TPH en amont de l'introduction de la phase organique dans les extracteurs 5 et 6.

Des lavages au diluant peuvent aussi être effectués sur les phases aqueuses contenant les produits finaux et les raffinats ainsi qu'il est indiqué sur les schémas, pour réduire les entraînements d'extractant dans ces flux.

On se réfère à présent à la figure 2 qui représente un schéma de principe d'une première variante du mode de mise en oeuvre illustré sur la figure 1, qui permet, elle, de produire, d'une part, un mélange d'uranium et de plutonium apte à être converti en un oxyde mixte (U, Pu)O₂ et, d'autre part, de l'uranium apte à être converti en UO₂.

Cette variante se distingue du mode de mise en oeuvre illustré sur la figure 1 en ce que l'opération de co-extraction qui se déroule dans l'extracteur 1 est réalisée en procédant à un apport d'acide nitreux, par exemple par injection de vapeurs nitreuses dans la cuve contenant la liqueur de dissolution ainsi que dans cet extracteur, et ce, en une quantité permettant de déplacer l'équilibre redox existant entre les états d'oxydation V et VI du neptunium vers le neptunium(V) et d'empêcher ainsi son extraction par le TBP de la phase organique.

De ce fait, dans cette variante, le neptunium n'est pas extrait de la liqueur de dissolution mais est éliminé du cycle, dès l'étape de décontamination, avec les actinides(III) et toutes les opérations qui sont situées en aval de l'étape de décontamination se déroulent sans neptunium.

Aussi :
- l'étape « *co-désextraction U*/*Pu*/*Np »* qui est illustrée sur la figure 1 est remplacée par une étape dite « co-désextraction *U*/*Pu* », qui vise à désextraire conjointement l'uranium et le plutonium de la phase organique issue du « *lavage Tc* » et que l'on réalise de la même manière que l'étape « co-*désextraction U*/*Pu*/*Np* » qui est illustrée sur la figure 1 ;
- l'opération de réduction, qui est située juste avant l'étape de partition illustrée sur la figure 1, n'a plus vocation qu'à réduire le plutonium(VI) contenu dans la phase aqueuse issue de l'opération de concentration qui la précède en plutonium(IV) ; tandis que
- les opérations de l'étape de purification illustrée sur la figure 1 sont remplacées par :
   * une opération, dénommée « co-*extraction U*/*Pu* », qui vise à extraire conjointement l'uranium(VI), le plutonium(IV) et le plutonium(VI) de la phase aqueuse issue de l'opération de concentration ;
   * une opération, dénommée *« lavage PF »,* qui vise à retirer de la phase organique les produits de fission ayant été extraits au cours de l'« *extraction U*/*Pu* » ; et
   * une opération, dénommée « *co-désextraction U*/*Pu* », qui vise à désextraire conjointement l'uranium, le plutonium et le plutonium de la phase organique issue du « *lavage PF* » ;
ces trois opérations étant réalisées de la même manière que les opérations « *co-extraction U*/*Pu*/*Np* », *« lavage PF »* et *« co-désextraction U*/*Pu*/*Np* » de l'étape de purification illustrée sur la figure 1, à ceci près que l'opération « *co-extraction U*/*Pu* » est réalisée sans apport d'acide nitreux.

On obtient ainsi, à l'issue de la « *co-désextraction U*/*Pu* », une phase aqueuse qui contient un mélange d'uranium(VI), de plutonium(IV) et de plutonium(VI), dont le degré de pureté est suffisant pour que cette phase puisse être envoyée, après un éventuel ajustement de sa teneur en uranium(VI) par ajout de nitrate d'uranyle et/ou un éventuel entreposage, vers un atelier propre à convertir ce mélange en un oxyde mixte (U,Pu)O₂.

On se réfère à présent à la figure 3 qui représente un schéma de principe d'une deuxième variante du mode de mise en oeuvre illustré sur la figure 1, qui permet, elle, de produire, d'une part, du plutonium apte à être converti en PuO₂ et, d'autre part, de l'uranium apte à être converti en UO₂.

Cette variante se distingue du mode de mise en oeuvre illustré sur la figure 1 en ce que :
- non seulement l'opération de co-extraction qui se déroule dans l'extracteur 1 est réalisée en procédant à un apport d'acide nitreux, par exemple par injection de vapeurs nitreuses dans la cuve contenant la liqueur de dissolution ainsi que dans cet extracteur, de sorte à réduire le neptunium(VI) présent dans cette liqueur en neptunium(V) et empêcher, ainsi, son extraction par le TBP de la phase organique,
- mais, de plus, l'opération « extraction U », qui se déroule dans l'extracteur 6, vise à extraire tout l'uranium présent dans la phase aqueuse issue de l'opération de réduction, ce qui est possible en utilisant un nombre d'étages théoriques et un débit de phase organique suffisants.

Ainsi, par exemple, pour un schéma comme celui donné en exemple ci-après, où l'on utilise 8 étages d'extraction (extracteur 6) et 8 étages de lavage (extracteur 7) avec un débit de phase organique conduisant à un rapport U/Pu de 0,55 dans la phase aqueuse issue de l'« *extraction U »,* il suffit, tous paramètres égaux par ailleurs, de majorer le débit de la phase organique (DEHiBA) entrant dans l'extracteur 6 de 10% pour extraire quantitativement l'uranium et obtenir, en sortie de cet extracteur, une phase aqueuse ne contenant que du plutonium.

Ainsi, non seulement toutes les opérations qui sont situées en aval de l'étape de décontamination se déroulent sans neptunium (comme dans la variante illustrée sur la figure 2) mais, de plus, les opérations de l'étape de purification illustrée sur la figure 1 sont remplacées par :
* une opération, dénommée *« extraction* Pu », qui vise à extraire le plutonium (IV) de la phase aqueuse issue de l'opération de concentration ;
* une opération, dénommée *« lavage PF »,* qui vise à retirer de la phase organique les produits de fission ayant été extraits au cours de *l'« extraction Pu* » ; et
* une opération, dénommée « *désextraction* Pu », qui vise à désextraire le plutonium de la phase organique issue du « *lavage PF* » ;
ces opérations étant réalisées de la même manière que les opérations « *co-extraction U*/*PulNp* », *« lavage PF »* et *« co-désextraction U*/*Pu*/*Np* » de l'étape de purification illustrée sur la figure 1, à ceci près que l'opération *« extraction U*/*Pu »* est réalisée sans apport d'acide nitreux.

On obtient ainsi, à l'issue de la *« désextraction Pu* », une phase aqueuse qui contient du plutonium(IV) et du plutonium (VI), dont le degré de pureté est suffisant pour que cette phase puisse être envoyée, après un éventuel entreposage, vers un atelier propre à convertir ce plutonium en PuO₂.

On se réfère à présent à la figure 4 qui représente un schéma de principe d'une troisième variante du mode de mise en oeuvre illustré sur la figure 1, qui permet, elle, de produire, d'une part, du plutonium et du neptunium apte à être converti en (Pu,Np)O₂ et, d'autre part, de l'uranium apte à être converti en UO₂.

Cette variante se distingue du mode de mise en oeuvre illustré sur la figure 1 en ce que l'opération *« extraction U »* qui se déroule dans l'extracteur 6, vise, comme dans la variante précédente, à extraire tout l'uranium présent dans la phase aqueuse issue de l'opération de réduction.

De ce fait, les opérations de l'étape de purification illustrée sur la figure 1 sont remplacées par :
* une opération, dénommée « *co-extraction Pu*/*Np »,* qui vise à extraire le plutonium(IV) et le neptunium de la phase aqueuse issue de l'opération de concentration ;
* une opération, dénommée *« lavage PF »,* qui vise à retirer de la phase organique les produits de fission ayant été extraits au cours de la « *co-extraction Pu*/*Np » ;* et
* une opération, dénommée « co-*désextraction Pu*/*Np* », qui vise à désextraire conjointement le plutonium et le neptunium de la phase organique issue du « *lavage PF* » ;
ces opérations étant réalisées de la même manière que les opérations « *co-extraction U*/*Pu*/*Np* », *« lavage PF »* et *« co-désextraction UlPu*/*Np* » de l'étape de purification illustrée sur la figure 1.

On obtient ainsi, à l'issue de la « *co-désextraction Pu*/*Np* » une phase aqueuse qui contient un mélange de plutonium(IV), de plutonium(VI), de neptunium(V) et de neptunium(VI), dont le degré de pureté est suffisant pour que cette phase puisse être envoyée, après un éventuel entreposage, vers un atelier propre à convertir ce mélange en un oxyde mixte (Pu,Np)O₂.

A titre d'exemple, une simulation a été réalisée à l'aide du logiciel PAREX du COMMISSARIAT A L'ENERGIE ATOMIQUE pour le mode de mise en oeuvre du procédé de l'invention qui illustré sur la figure 1.

Les données de cette simulation sont les suivantes :
Liqueur de dissolution :
   [U] = 250 g/L
   [Pu] = 3,02 g/L
   [nu] 0,24 g/L
   [HNO₃] = 4, 5 M
   Débit d'entrée dans l'extracteur 1 = 637 L/h
Etape de décontamination :
   * Phase organique entrant dans l'extracteur 1 : TBP à 30% (v/v) dans du TPH circulant à un débit de 1272 L/h ;
   * Phase aqueuse entrant dans l'extracteur 2 : solution d'HNO₃ 2 M circulant à un débit de 273 L/h ;
   * Phase aqueuse entrant dans l'extracteur 3 : solution aqueuse d'HNO₃ 1,5 M circulant à un débit de 304 L/h, acidifiée ensuite par addition d'une solution d'HNO₃ 12 M circulant à un débit de 243 L/h ;
   * Phase organique entrant dans l'extracteur 4 : TBP à 30% (v/v) dans du TPH circulant à un débit de 545 L/h ;
Etape de co-désextraction de l'uranium et du plutonium :
   * Phase aqueuse entrant dans l'extracteur 5 : solution d'HNO₃ 0,01 M circulant à un débit de 2317 L/h, acidifiée ensuite par addition d'une solution d'HNO₃ 12 M circulant à un débit de 75 L/h ; température = 50°C ;
   * Phase aqueuse sortant de l'extracteur 5 : [U] = 65 g/L ; [Pu] = 0,78 g/L ; [Np] = 0,062 g/L ; présence de Pu(VI) ; débit = 2450 L/h ;
Etape de partition :
   * Phase aqueuse entrant dans l'extracteur 6 : [U] = 314 g/L ; [Pu (IV)] = 3,8 g/L ; [Np] = 0,3 g/L ; [HNO₃] = 5 M ; débit = 508 L/h ;
   * Phase organique entrant dans l'extracteur 6 : DEHiBA à 1,5 M % (v/v) dans du TPH circulant à un débit de 1379 L/h ;
   * Phase aqueuse entrant dans l'extracteur 7 : solution d'HNO₃ 1,5 M circulant à un débit de 226 L/h ; apport de HNO₂ ;
   * Phase aqueuse entrant dans l'extracteur 8 : solution d'HNO₃ 0,01 M circulant à un débit de 735 L/h ; température = 50°C ;
   * Phase aqueuse sortant de l'extracteur 8 : [U] = 200 g/L ;
   * Phase aqueuse sortant de l'extracteur 6 : [U] = 1,56 g/L ; [Pu] = 2,85 g/L ; [Np] = 0,228 g/L ; débit de 677,7 L/h ;
Etape de purification :
   Cette étape intervient après une opération de concentration et d'ajustage acide du flux de production de l'étape précédente.
   * Phase aqueuse entrant dans l'extracteur 9 : [U] = 23,6 g/L ; [Pu] = 43 g/L ; [Np] = 3,45 g/L ; [HNO₃] = 4, 8 M ; débit = 44,9 L/h ;
   * Phase organique entrant dans l'extracteur 9 : TBP à 30% (v/v) dans du TPH circulant à un débit de 60 L/h ;
   * Phase aqueuse entrant dans l'extracteur 10 : solution d'HNO₃ 1,5 M circulant à un débit de 12 L/h acidifiée ensuite par addition d'une solution d'HNO₃ 10 M circulant à un débit de 3 L/h ;
   * Phase aqueuse entrant dans l'extracteur 11 : solution d'HNO₃ 0,01 M circulant à un débit de 66,9 L/h acidifiée ensuite par addition d'une solution d'HNO₃ 10 M circulant à un débit de 2,1 L/h ; température = 40°C ;
   * Phase aqueuse sortant de l'extracteur 11 : [U] = 15 g/L ; [Pu] = 27,4 g/L ; [Np] = 2,2 g/L ; [HNO₃] = 0,5 M ; Débit = 70,6 L/h.

On obtient ainsi une phase aqueuse qui contient un mélange comprenant 15 g/L d'uranium, 27,4 g/L de plutonium et 2,2 g/L de neptunium totalement décontaminés en produits de fission, propre à être converti en un oxyde mixte d'uranium, de plutonium et de neptunium (U, Pu, Np) O₂.

### REFERENCES CITEES

**[1]** WO-A-2007/135178
**[2]** WO-A-2005/052950

## Revendications

1. Procédé de traitement d'un combustible nucléaire usé, qui comprend au moins les étapes suivantes :
a) la décontamination de l'uranium et du plutonium présents dans une phase aqueuse nitrique résultant de la dissolution de ce combustible dans de l'acide nitrique, vis-à-vis de l'américium, du curium et de la majeure partie des produits de fission se trouvant également dans cette phase, laquelle décontamination comprend au moins la co-extraction de l'uranium, à l'état d'oxydation VI, et du plutonium, à l'état d'oxydation IV, dans une phase organique non miscible à l'eau, contenant un premier extractant capable d'extraire davantage l'uranium(VI) et le plutonium(IV) que les actinides(III) et les produits de fission d'une phase aqueuse acide ;
b) la co-désextraction, dans une phase aqueuse nitrique, de l'uranium et du plutonium co-extraits à l'étape a), l'uranium étant désextrait à l'état d'oxydation VI et le plutonium étant désextrait aux états d'oxydation IV et VI par suite de la formation, au cours de cette co-désextraction, de plutonium(VI) par dismutation du plutonium(IV) ;
c) la partition de l'uranium et du plutonium présents dans la phase aqueuse nitrique issue de l'étape b) en une première phase aqueuse contenant soit du plutonium sans uranium soit un mélange d'uranium et de plutonium, et une deuxième phase aqueuse contenant de l'uranium sans plutonium, laquelle partition comprend au moins :
- l'extraction sélective de tout ou partie de l'uranium, à l'état d'oxydation VI, dans une phase organique non miscible à l'eau, contenant un deuxième extractant qui est différent du premier extractant et qui est capable d'extraire davantage l'uranium(VI) que le plutonium(IV) d'une phase aqueuse acide, cette extraction étant réalisée après et/ou conjointement avec un traitement de la phase aqueuse nitrique issue de l'étape b) pour réduire le plutonium(VI) présent dans cette phase en plutonium(IV) ; et
- la désextraction, dans une phase aqueuse nitrique, de l'uranium(VI) ainsi extrait ; et
d) la purification du plutonium ou du mélange d'uranium et de plutonium présent dans la phase aqueuse issue de l'extraction de l'étape c) vis-à-vis des produits de fission susceptibles d'être encore présents dans cette phase.

2. Procédé selon la revendication 1, qui comprend au moins les étapes suivantes :
a) la décontamination de l'uranium, du plutonium et du neptunium présents dans la phase aqueuse nitrique résultant de la dissolution du combustible vis-à-vis de l'américium, du curium et de la majeure partie des produits de fission se trouvant également dans cette phase, laquelle décontamination comprend au moins la co-extraction de l'uranium(VI), du plutonium(IV) et du neptunium, à l'état d'oxydation VI, dans la phase organique contenant le premier extractant ;
b) la co-désextraction, dans une phase aqueuse nitrique, de l'uranium, du plutonium et du neptunium co-extraits à l'étape a), l'uranium étant désextrait à l'oxydation VI, le plutonium étant désextrait aux états d'oxydation IV et VI et le neptunium étant désextrait aux états d'oxydation V et VI ;
c) la partition de l'uranium, du plutonium et du neptunium présents dans la phase aqueuse nitrique issue de l'étape b) en une première phase aqueuse contenant un mélange d'uranium, de plutonium et de neptunium et une deuxième phase aqueuse contenant de l'uranium sans plutonium ni neptunium, laquelle partition comprend au moins :
- l'extraction sélective d'une fraction de l'uranium, à l'état d'oxydation VI, dans la phase organique contenant le deuxième extractant, cette extraction étant réalisée après un traitement de la phase aqueuse nitrique issue de l'étape b) pour réduire le plutonium(VI) présent dans cette phase en plutonium(IV) ; et
- la désextraction, dans une phase aqueuse nitrique, de l'uranium(VI) ainsi extrait ; et
d) la purification du mélange d'uranium, de plutonium et de neptunium présent dans la phase aqueuse issue de l'extraction de l'étape c) vis-à-vis des produits de fission susceptibles d'être encore présents dans cette phase.

3. Procédé selon la revendication 2, dans lequel l'étape d) comprend au moins :
- l'extraction du mélange d'uranium, de plutonium et de neptunium présent dans la phase aqueuse issue de l'extraction de l'étape c), respectivement aux états d'oxydation VI, IV et VI, dans une phase organique non miscible à l'eau, contenant un troisième extractant qui est différent du deuxième extractant et qui est capable d'extraire davantage l'uranium(VI) et le plutonium(IV) que les produits de fission d'une phase aqueuse acide ; et
- la désextraction, dans une phase aqueuse nitrique du mélange d'uranium(VI), de plutonium(IV) et de neptunium(VI) ainsi extrait.

4. Procédé selon la revendication 3, qui comprend, au cours de l'extraction de l'étape d), le traitement de la phase aqueuse nitrique issue de l'extraction de l'étape c) pour déplacer l'équilibre redox existant entre les états d'oxydation V et VI du neptunium vers la formation de neptunium(VI).

5. Procédé selon la revendication 1, qui comprend au moins les étapes suivantes :
a) la décontamination de l'uranium et du plutonium présents dans la phase aqueuse nitrique résultant de la dissolution du combustible vis-à-vis du neptunium, de l'américium, du curium et de la majeure partie des produits de fission se trouvant également dans cette phase, laquelle décontamination comprend au moins la co-extraction de l'uranium(VI) et du plutonium(IV) dans la phase organique contenant le premier extractant, cette co-extraction étant réalisée après et/ou conjointement avec un traitement de ladite phase aqueuse nitrique pour déplacer l'équilibre redox existant entre les états d'oxydation V et VI du neptunium vers la formation de neptunium(V) ;
b) la co-désextraction, dans une phase aqueuse nitrique, de l'uranium et du plutonium co-extraits à l'étape a), l'uranium étant désextrait à l'oxydation VI et le plutonium étant désextrait aux états d'oxydation IV et VI ;
c) la partition de l'uranium et du plutonium présents dans la phase aqueuse nitrique issue de l'étape b) en une première phase aqueuse contenant un mélange d'uranium et de plutonium et une deuxième phase aqueuse contenant de l'uranium sans plutonium, laquelle partition comprend au moins :
- l'extraction sélective d'une fraction de l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
- la désextraction, dans une phase aqueuse nitrique, de l'uranium(VI) ainsi extrait ; et
d) la purification du mélange d'uranium et de plutonium présent dans la phase aqueuse issue de l'extraction de l'étape c) vis-à-vis des produits de fission susceptibles d'être encore présents dans cette phase.

6. Procédé selon la revendication 5, dans lequel l'étape d) comprend au moins :
- l'extraction du mélange d'uranium et de plutonium présent dans la phase aqueuse issue de l'extraction de l'étape c), respectivement aux états d'oxydation VI et IV, dans une phase organique non miscible à l'eau, contenant un troisième extractant qui est différent du deuxième extractant et qui est capable d'extraire davantage l'uranium(VI) et le plutonium(IV) que les produits de fission d'une phase aqueuse acide ; et
- la désextraction, dans une phase aqueuse nitrique du mélange d'uranium(VI) et de plutonium(IV) ainsi extrait.

7. Procédé selon la revendication 1, qui comprend au moins les étapes suivantes :
a) la décontamination de l'uranium et du plutonium présents dans la phase aqueuse nitrique résultant de la dissolution du combustible vis-à-vis du neptunium, de l'américium, du curium et de la majeure partie des produits de fission se trouvant également dans cette phase, laquelle décontamination comprend au moins la co-extraction de l'uranium(VI) et du plutonium(IV) dans la phase organique contenant le premier extractant, cette co-extraction étant réalisée après et/ou conjointement avec un traitement de ladite phase aqueuse nitrique pour déplacer l'équilibre redox existant entre les états d'oxydation V et VI du neptunium vers la formation de neptunium(V) ;
b) la co-désextraction, dans une phase aqueuse nitrique, de l'uranium et du plutonium co-extraits à l'étape a), l'uranium étant désextrait à l'oxydation VI et le plutonium étant désextrait aux états d'oxydation IV et VI ;
c) la partition de l'uranium et du plutonium présents dans la phase aqueuse nitrique issue de l'étape b) en une première phase aqueuse contenant du plutonium sans uranium et une deuxième phase aqueuse contenant de l'uranium sans plutonium, laquelle partition comprend au moins :
- l'extraction sélective de tout l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
- la désextraction, dans une phase aqueuse nitrique, de l'uranium(VI) ainsi extrait ; et
d) la purification du plutonium présent dans la phase aqueuse issue de l'extraction de l'étape c) vis-à-vis des produits de fission susceptibles d'être encore présents dans cette phase.

8. Procédé selon la revendication 7, dans lequel l'étape d) comprend au moins :
- l'extraction du plutonium présent dans la phase aqueuse issue de l'extraction de l'étape c), à l'état d'oxydation IV, dans une phase organique non miscible à l'eau, contenant un troisième extractant qui est différent du deuxième extractant et qui est capable d'extraire davantage le plutonium(IV) que les produits de fission d'une phase aqueuse acide ; et
- la désextraction, dans une phase aqueuse nitrique du plutonium(IV) ainsi extrait.

9. Procédé selon la revendication 1, qui comprend au moins les étapes suivantes :
a) la décontamination de l'uranium, du plutonium et du neptunium présents dans la phase aqueuse nitrique résultant de la dissolution du combustible vis-à-vis de l'américium, du curium et de la majeure partie des produits de fission se trouvant également dans cette phase, laquelle décontamination comprend au moins la co-extraction de l'uranium(VI), du plutonium(IV) et du neptunium, à l'état d'oxydation VI, dans la phase organique contenant le premier extractant ;
b) la co-désextraction, dans une phase aqueuse nitrique, de l'uranium, du plutonium et du neptunium co-extraits à l'étape a), l'uranium étant désextrait à l'oxydation VI, le plutonium étant désextrait aux états d'oxydation IV et VI et le neptunium étant désextrait aux états d'oxydation V et VI ;
c) la partition de l'uranium, du plutonium et du neptunium présents dans la phase aqueuse nitrique issue de l'étape b) en une première phase aqueuse contenant un mélange de plutonium et de neptunium sans uranium et une deuxième phase aqueuse contenant de l'uranium sans plutonium ni neptunium, laquelle partition comprend au moins :
- l'extraction sélective de tout l'uranium, à l'état d'oxydation VI, dans la phase organique contenant le deuxième extractant, cette extraction étant réalisée après un traitement de la phase aqueuse issue de l'étape b) pour réduire le plutonium(VI) présent dans cette phase en plutonium(IV) ; et
- la désextraction, dans une phase aqueuse nitrique, de l'uranium(VI) ainsi extrait ; et
d) la purification du mélange de plutonium et de neptunium présent dans la phase aqueuse issue de l'extraction de l'étape c) vis-à-vis des produits de fission susceptibles d'être encore présents dans cette phase.

10. Procédé selon la revendication 9, dans lequel l'étape d) comprend au moins :
- l'extraction du mélange de plutonium et de neptunium présent dans la phase aqueuse issue de l'extraction de l'étape c), respectivement aux états d'oxydation IV et VI, dans une phase organique non miscible à l'eau, contenant un troisième extractant qui est différent du deuxième extractant et qui est capable d'extraire davantage le plutonium(IV) que les produits de fission d'une phase aqueuse acide ; et
- la désextraction, dans une phase aqueuse nitrique du mélange de plutonium(IV) et de neptunium(VI) ainsi extrait.

11. Procédé selon la revendication 10, qui comprend, cours de l'extraction de l'étape d), le traitement de la phase aqueuse nitrique issue de l'extraction de l'étape c) pour déplacer l'équilibre redox existant entre les états d'oxydation V et VI du neptunium vers la formation de neptunium(VI).

12. Procédé selon l'une quelconque des revendications 3 à 11, dans lequel on utilise le même extractant comme premier et troisième extractants.

13. Procédé selon la revendication 12, dans lequel on utilise du phosphate de tri-n-butyle comme premier et troisième extractants.

14. Procédé selon l'une quelconque des revendications précédentes, dans lequel le deuxième extractant est choisi parmi les N,N-dialkylamides.

15. Procédé selon la revendication 14, dans lequel le deuxième extractant est du N,N-di-(2-éthyl-hexyl)isobutanamide.

16. Procédé selon l'une quelconque des revendications précédentes, dans lequel l'étape c) comprend l'apport d'acide nitreux à la phase aqueuse nitrique issue de l'étape b).

17. Procédé selon la revendication 4 ou la revendication 11, dans lequel le traitement qui est réalisé au cours de l'extraction de l'étape d) comprend l'apport d'acide nitreux.

18. Procédé selon l'une quelconque des revendications précédentes, qui comprend de plus, entre les étapes b) et c), la concentration de la phase aqueuse nitrique issue de l'étape b).

19. Procédé selon l'une quelconque des revendications précédentes, qui comprend de plus, entre les étapes c) et d), la concentration de la phase aqueuse nitrique issue de l'étape l'extraction de l'étape c).

20. Procédé selon l'une quelconque des revendications précédentes, dans lequel le combustible nucléaire usé est un combustible d'oxyde d'uranium ou d'oxyde mixte d'uranium et de plutonium.

## Patentansprüche

1. Verfahren zur Behandlung eines verbrauchten Kernbrennstoffes, das mindestens die folgenden Schritte umfasst:
a) Dekontaminieren von Uran und Plutonium, die in einer wässrigen Salpetersäurephase vorliegen, welche durch Auflösung des Kernbrennstoffes in Salpetersäure entstanden ist, von Americium, Curium und den meisten Spaltprodukten, welche sich ebenfalls in dieser Phase befinden, wobei die Dekontamination mindestens die Co-Extraktion von Uran in der Oxidationsstufe VI und von Plutonium in der Oxidationsstufe IV in eine mit Wasser nicht-mischbare organische Phase umfasst, welche ein erstes Extraktionsmittel umfasst, welches bevorzugt das Uran (VI) und das Plutonium (IV) gegenüber den Aktiniden (III) und den Spaltprodukten der sauren wässrigen Phase extrahieren kann;
b) Co-Reextrahieren des in Schritt a) co-extrahierten Urans und Plutoniums in eine wässrige Salpetersäurephase, wobei das Uran in der Oxidationsstufe VI reextrahiert wird und das Plutonium in der Oxidationsstufe IV und VI infolge der Bildung von Plutonium (VI) durch Dismutierung von Plutonium (IV) während der Co-Reextraktion reextrahiert wird;
c) Auftrennen des Urans und Plutoniums, die in der aus Schritt b) erhaltenen wässrigen Salpetersäurephase vorliegen, in eine erste wässrige Phase umfassend entweder Plutonium ohne Uran oder eine Mischung aus Uran und Plutonium, und eine zweite wässrige Phase umfassend Uran ohne Plutonium, wobei das Auftrennen mindestens umfasst:
- selektives Extrahieren des gesamten Urans in der Oxidationsstufe VI oder eines Teils davon in eine mit Wasser nicht mischbare organische Phase umfassend ein zweites Extraktionsmittel, das sich von dem ersten Extraktionsmittel unterscheidet und das geeignet ist, bevorzugt Uran (VI) gegenüber Plutonium (IV) aus einer wässrigen Salpetersäurephase zu extrahieren, wobei diese Extraktion nach und/oder gemeinsam mit einer Behandlung der wässrigen Salpetersäurephase aus Schritt b) erfolgt, um das in dieser Phase vorhandene Plutonium (VI) zu Plutonium (IV) zu reduzieren; und
- Reextrahieren von so gewonnenem Uran (VI) in eine wässrige Salpetersäurephase; und
d) das Reinigen des Plutoniums oder der Mischung von Uran und Plutonium, welche(s) in der wässrigen Phase aus der Extraktion von Schritt c) vorliegt, von den Spaltprodukten, die in dieser Phase noch vorhanden sein können.

2. Verfahren nach Anspruch 1, das mindestens die folgenden Schritte umfasst:
a) Dekontaminieren von Uran, Plutonium und Neptunium, die in einer wässrigen Salpetersäurephase vorliegen, welche durch Auflösung des Kernbrennstoffes entstanden ist, von Americium, Curium und den meisten Spaltprodukten, welche sich ebenfalls in dieser Phase befinden, wobei die Dekontamination mindestens die Co-Extraktion von Uran in der Oxidationsstufe VI, von Plutonium in der Oxidationsstufe IV, und von Neptunium in der Oxidationsstufe VI in die organische Phase enthaltend das erste Extraktionsmittel umfasst;
b) Co-Reextrahieren des in Schritt a) co-extrahierten Urans, Plutoniums und Neptuniums in eine wässrige Salpetersäurephase, wobei das Uran in der Oxidationsstufe VI reextrahiert wird, das Plutonium in der Oxidationsstufe IV und VI reextrahiert wird und das Neptunium in der Oxidationsstufe V und VI reextrahiert wird;
c) Auftrennen des Urans, Plutoniums und Neptuniums, die in der aus Schritt b) erhaltenen wässrigen Salpetersäurephase vorliegen, in eine erste wässrige Phase umfassend eine Mischung aus Uran, Plutonium und Neptunium und eine zweite wässrige Phase umfassend Uran ohne Plutonium und Neptunium, wobei das Auftrennen mindestens umfasst:
- selektives Extrahieren eines Teils des Urans in der Oxidationsstufe VI in die organische Phase umfassend das zweite Extraktionsmittel, wobei diese Extraktion nach einer Behandlung der wässrigen Salpetersäurephase aus Schritt b) erfolgt, um das in dieser Phase vorhandene Plutonium (VI) zu Plutonium (IV) zu reduzieren; und
- Reextrahieren von so gewonnenem Uran (VI) in eine wässrige Salpetersäurephase; und
d) Reinigen der Mischung aus Uran, Plutonium und Neptunium, welche in der wässrigen Phase aus der Extraktion von Schritt c) vorliegt, von den Spaltprodukten, die in dieser Phase noch vorhanden sein können.

3. Verfahren nach Anspruch 2, wobei der Schritt d) mindestens umfasst:
- Extrahieren der Mischung aus Uran, Plutonium und Neptunium, welche in der wässrigen Phase aus der Extraktion von Schritt c) vorliegt, jeweils in den Oxidationsstufen VI, IV und VI, in eine nicht mit Wasser mischbare organische Phase umfassend ein drittes Extraktionsmittel, welches verschieden vom zweiten Extraktionsmittel ist, und welches geeignet ist, bevorzugt Uran (VI) und Plutonium (IV) gegenüber den Spaltprodukten aus einer sauren wässrigen Phase zu extrahieren; und
- Reextrahieren der so gewonnenen Mischung aus Uran (VI), Plutonium (IV) und Neptunium in eine wässrige Salpetersäurephase.

4. Verfahren nach Anspruch 3 umfassend die Behandlung der wässrigen Salpetersäurephase aus der Extraktion von Schritt c) während der Extraktion von Schritt d), um das Redoxgleichgewicht, das zwischen den Oxidationsstufen V und VI des Neptuniums besteht, in Richtung der Bildung von Neptunium (VI) zu verschieben.

5. Verfahren nach Anspruch 1, das mindestens die folgenden Schritte umfasst:
a) Dekontaminieren von Uran und Plutonium, die in der wässrigen Salpetersäurephase vorliegen, welche durch Auflösung des Kernbrennstoffes entstanden ist, von Neptunium, Americium, Curium und den meisten Spaltprodukten, welche sich ebenfalls in dieser Phase befinden, wobei die Dekontamination mindestens die Co-Extraktion von Uran (VI) und von Plutonium (IV) in die organische Phase enthaltend das erste Extraktionsmittel umfasst, wobei diese Co-Extraktion nach und/oder gemeinsam mit einer Behandlung dieser wässrigen Salpetersäurephase erfolgt, um das Redoxgleichgewicht, das zwischen den Oxidationsstufen V und VI des Neptuniums besteht, in Richtung der Bildung von Neptunium (V) zu verschieben;
b) Co-Reextrahieren des aus Schritt a) co-extrahierten Urans und Plutoniums in eine wässrige Salpetersäurephase, wobei das Uran in der Oxidationsstufe VI reextrahiert wird und das Plutonium in der Oxidationsstufe IV und VI reextrahiert wird;
c) Auftrennen des Urans und Plutoniums, die in der aus Schritt b) erhaltenden wässrigen Salpetersäurephase vorliegen, in eine erste wässrige Phase umfassend eine Mischung aus Uran und Plutonium, und eine zweite wässrige Phase umfassend Uran ohne Plutonium, wobei das Auftrennen mindestens umfasst:
- selektives Extrahieren eines Teils des Urans in der Oxidationsstufe VI in die organische Phase umfassend das zweite Extraktionsmittel, wobei diese Extraktion nach einer Behandlung der wässrigen Salpetersäurephase aus Schritt b) erfolgt, um das in dieser Phase vorhandene Plutonium (VI) zu Plutonium (IV) zu reduzieren; und
- Reextrahieren von so gewonnenem Uran (VI) in eine wässrige Salpetersäurephase; und
d) Reinigen der Mischung aus Uran und Plutonium, welche in der wässrigen Phase aus der Extraktion von Schritt aus der Extraktion von Schritt c) vorliegt, von den Spaltprodukten, die in dieser Phase noch vorhanden sein können.

6. Verfahren nach Anspruch 5, wobei der Schritt d) mindestens umfasst:
- Extrahieren der Mischung aus Uran und Plutonium, welche in der wässrigen Phase aus der Extraktion von Schritt c) vorliegt, jeweils in den Oxidationsstufen VI und IV, in eine nicht mit Wasser mischbare organische Phase umfassend ein drittes Extraktionsmittel, welches verschieden vom zweiten Extraktionsmittel ist, und welches geeignet ist, bevorzugt Uran (VI) und Plutonium (IV) gegenüber den Spaltprodukte aus einer wässrigen Salpetersäurephase zu extrahieren; und
- Reextrahieren der so gewonnenen Mischung aus Uran (VI) und Plutonium (IV) in eine wässrige Salpetersäurephase.

7. Verfahren nach Anspruch 1, das mindestens die folgenden Schritte umfasst:
a) Dekontaminieren des Urans und Plutoniums, die in der wässrigen Salpetersäurephase vorliegen, welche durch Auflösung des Kernbrennstoffes entstanden ist, von Neptunium, Americium, Curium und den meisten Spaltprodukten, welche sich ebenfalls in dieser Phase befinden, wobei die Dekontamination mindestens die Co-Extraktion von Uran (VI), und von Plutonium (IV) in die organische Phase enthaltend das erste Extraktionsmittel umfasst, wobei diese Co-Extraktion nach und/oder gemeinsam mit einer Behandlung dieser wässrigen Salpetersäurephase erfolgt, um das Redoxgleichgewicht, das zwischen den Oxidationsstufen V und VI des Neptuniums besteht, in Richtung der Bildung von Neptunium (V) zu verschieben;
b) Co-Reextrahieren des aus Schritt a) co-extrahierten Urans und Plutoniums in eine wässrige Salpetersäurephase, wobei das Uran in der Oxidationsstufe VI reextrahiert wird und das Plutonium in der Oxidationsstufe IV und VI reextrahiert wird;
c) Auftrennen des Urans und Plutoniums, die in der aus Schritt b) erhaltenen wässrigen Salpetersäurephase vorliegen, in eine erste wässrige Phase umfassend Plutonium ohne Uran, und eine zweite wässrige Phase umfassend Uran ohne Plutonium, wobei das Auftrennen mindestens umfasst:
- selektives Extrahieren des gesamten Urans in der Oxidationsstufe VI in die organische Phase umfassend das zweite Extraktionsmittel, wobei diese Extraktion nach einer Behandlung der wässrigen Salpetersäurephase aus Schritt b) erfolgt, um das in dieser Phase vorhandene Plutonium (VI) zu Plutonium (IV) zu reduzieren; und
- Reextrahieren von so gewonnenem Uran (VI) in eine wässrige Salpetersäurephase; und
d) Reinigen des Plutoniums, welches in der wässrigen Phase aus der Extraktion von Schritt c) vorliegt, von den Spaltprodukten, die in dieser Phase noch vorhanden sein können.

8. Verfahren nach Anspruch 7, wobei der Schritt d) mindestens umfasst:
- Extrahieren des Plutoniums in der Oxidationsstufe IV, welches in der wässrigen Phase aus der Extraktion von Schritt c) vorliegt, in eine nicht mit Wasser mischbare organische Phase umfassend ein drittes Extraktionsmittel, welches verschieden vom zweiten Extraktionsmittel ist, und welches geeignet ist, bevorzugt Plutonium (IV) gegenüber den Spaltprodukten aus einer sauren wässrigen Phase zu extrahieren; und
- Reextrahieren der so gewonnenen Mischung aus Uran (VI) und Plutonium (IV) in einer wässrigen Salpetersäurephase.

9. Verfahren nach Anspruch 1, das mindestens die folgenden Schritte umfasst:
a) Dekontaminieren des Urans, Plutoniums und Neptuniums, die in einer wässrigen Salpetersäurephase vorliegen, welche durch Auflösung des Kernbrennstoffes entstanden ist, von Americium, Curium und den meisten Spaltprodukten, welche sich ebenfalls in dieser Phase befinden, wobei die Dekontamination mindestens die Co-Extraktion von Uran (VI), von Plutonium (IV), und von Neptunium in der Oxidationsstufe VI in die organische Phase enthaltend das erste Extraktionsmittel umfasst;
b) Co-Reextrahieren des in Schritt a) co-extrahierten Urans, Plutoniums und Neptuniums in eine wässrige Salpetersäurephase, wobei das Uran in der Oxidationsstufe VI reextrahiert wird, das Plutonium in der Oxidationsstufe IV und VI reextrahiert wird und das Neptunium in der Oxidationsstufe V und VI reextrahiert wird;
c) Auftrennen des Urans, Plutoniums und Neptuniums, die in der aus Schritt b) erhaltenen wässrigen Salpetersäurephase vorliegen, in eine erste wässrige Phase umfassend eine Mischung aus Plutonium und Neptunium ohne Uran und eine zweite wässrige Phase umfassend Uran ohne Plutonium und Neptunium, wobei das Auftrennen mindestens umfasst:
- selektives Extrahieren des gesamten Urans in der Oxidationsstufe VI in die organische Phase umfassend das zweite Extraktionsmittel, wobei diese Extraktion nach einer Behandlung der wässrigen Salpetersäurephase aus Schritt b) erfolgt, um das in dieser Phase vorhandene Plutonium (VI) zu Plutonium (IV) zu reduzieren; und
- Reextrahieren von so gewonnenem Uran (VI) in eine wässrige Salpetersäurephase; und
d) Reinigen der Mischung aus Plutonium und Neptunium, welche in der wässrigen Phase aus der Extraktion von Schritt c) vorliegt, von den Spaltprodukten, die in dieser Phase noch vorhanden sein können.

10. Verfahren nach Anspruch 9, wobei der Schritt d) mindestens umfasst:
- Extrahieren der Mischung aus Plutonium und Neptunium, welche in der wässrigen Phase aus der Extraktion von Schritt c) vorliegt, jeweils in den Oxidationsstufen IV und VI, in eine nicht mit Wasser mischbare organische Phase umfassend ein drittes Extraktionsmittel, welches verschieden vom zweiten Extraktionsmittel ist, und welches geeignet ist, bevorzugt Plutonium (IV) gegenüber den Spaltprodukten aus einer sauren wässrigen Phase zu extrahieren; und
- Reextrahieren der so gewonnenen Mischung aus Plutonium (IV) und Neptunium (VI) in eine wässrige Salpetersäurephase.

11. Verfahren nach Anspruch 10 umfassend die Behandlung der wässrigen Salpetersäurephase aus der Extraktion von Schritt c) während der Extraktion aus Schritt d), um das Redoxgleichgewicht, das zwischen den Oxidationsstufen V und VI des Neptuniums besteht, in Richtung der Bildung von Neptunium (VI) zu verschieben.

12. Verfahren nach einem der Ansprüche 3 bis 11, wobei das gleiche Extraktionsmittel als erstes und drittes Extraktionsmittel verwendet wird.

13. Verfahren nach Anspruch 12, wobei Tri-n-butylphosphat als erstes und drittes Extraktionsmittel verwendet wird.

14. Verfahren nach einem der vorhergehenden Ansprüche, wobei das zweite Extraktionsmittel aus N,N-Dialkylamiden ausgewählt ist.

15. Verfahren nach Anspruch 14, wobei das zweite Extraktionsmittel *N,N*-Di-(2-ethylhexyl)isobutanamid ist.

16. Verfahren nach einem der vorhergehenden Ansprüche, wobei der Schritt c) das Einbringen von salpetriger Säure in die wässrige Salpetersäurephase aus Schritt b) umfasst.

17. Verfahren nach Anspruch 4 oder Anspruch 11, wobei die Behandlung, welche während der Extraktion von Schritt d) erfolgt, das Einbringen von salpetriger Säure umfasst.

18. Verfahren nach einem der vorhergehenden Ansprüche, das ferner zwischen den Schritten b) und c), die Konzentrierung der wässrigen Salpetersäurephase aus Schritt b) umfasst.

19. Verfahren nach einem der vorhergehenden Ansprüche, das ferner zwischen den Schritten c) und d), die Konzentrierung der wässrigen Salpetersäurephase aus der Extraktion von Schritt c) umfasst.

20. Verfahren nach einem der vorhergehenden Ansprüche, wobei der verbrauchte Kernbrennstoff ein Uranoxid-Brennstoff oder ein gemischtes Uran-Plutonium-Oxid ist.

## Claims

1. A process for reprocessing spent nuclear fuel which at least comprises the following steps:
a) decontaminating the uranium and plutonium present in a nitric aqueous phase, resulting from the dissolution of this fuel in nitric acid, from the americium, curium and most of the fission products also contained in this phase, which decontaminating comprises at least co-extracting the uranium in oxidation state VI and the plutonium in oxidation state IV, in an organic phase non-miscible with water and containing a first extractant which is more capable of extracting uranium(VI) and plutonium(IV) than actinides(III) and fission products from an acid aqueous phase;
b) co-stripping, in a nitric aqueous phase, the uranium and plutonium co-extracted at step a), the uranium being stripped in oxidation state VI and the plutonium being stripped in oxidation states IV and VI further to the formation, during this co-stripping, of plutonium(VI) by dismutation of the plutonium(IV);
c) partitioning the uranium and plutonium present in the nitric aqueous phase stemming from step b) into a first aqueous phase containing either plutonium without uranium or a mixture of uranium and plutonium, and a second aqueous phase containing uranium without plutonium, which partitioning comprises at least:
- selectively extracting all or part of the uranium in oxidation state VI, in an organic phase non-miscible with water and containing a second extractant which is different from the first extractant and which is more capable of extracting uranium (VI) than plutonium(IV) from an acid aqueous phase, this extracting being performed after and/or jointly with treating of the nitric aqueous phase stemming from step b) to reduce the plutonium(VI) present in this phase to plutonium(IV); and
- stripping, in a nitric aqueous phase, the uranium(VI) thus extracted; and
d) purifying the plutonium or mixture of uranium and plutonium present in the aqueous phase stemming from the extraction of step c) to remove any fission products which may still be present in this phase.

2. The process according to claim 1, which comprises at least the following steps:
a) decontaminating the uranium, plutonium and neptunium present in the nitric aqueous phase resulting from the dissolution of the fuel, to remove the americium, curium and most of the fission products also contained in this phase, which decontaminating comprises at least co-extracting the uranium(VI), plutonium(IV) and the neptunium, in oxidation state VI, in the organic phase containing the first extractant;
b) co-stripping, in a nitric aqueous phase, the uranium, plutonium and neptunium co-extracted at step a), the uranium being stripped in oxidation state VI, the plutonium being stripped in oxidation states IV and VI and the neptunium being stripped in oxidation states V and VI;
c) partitioning the uranium, plutonium and neptunium present in the nitric aqueous phase stemming from step b) into a first aqueous phase containing a mixture of uranium, plutonium and neptunium, and a second aqueous phase containing uranium without either plutonium or neptunium, which partitioning at least comprises:
- selectively extracting a fraction of the uranium, in oxidation state VI, in the organic phase containing the second extractant, this extracting being performed after treating the nitric aqueous phase stemming from step b) to reduce the plutonium(VI) present in this phase to plutonium(IV); and
- stripping, in a nitric aqueous phase, the uranium(VI) thus extracted; and
d) purifying the mixture of uranium, plutonium and neptunium present in the aqueous phase stemming from the extraction of step c) to remove any fission products which may still be present in this phase.

3. The process according to claim 2, wherein step d) at least comprises:
- extracting the mixture of uranium, plutonium and neptunium present in the aqeuous phase stemming from the extraction of step c), in oxidation states VI, IV and VI respectively, in an organic phase non-miscible with water and containing a third extractant which is different from the second extractant and which is more capable of extracting uranium(VI) and plutonium(IV) than fission products from an acid aqueous phase; and
- stripping, in a nitric aqueous phase, of the mixture of uranium(VI), plutonium(IV) and neptunium(VI) thus extracted.

4. The process according to claim 3, which, during the extraction of step d), comprises the processing of the nitric aqueous phase stemming from the extraction of step c) to displace the redox equilibrium existing between the oxidation states V and VI of the neptunium to the formation of neptunium(VI).

5. The process according to claim 1, which at least comprises the following steps:
a) decontaminating the uranium and plutonium present in the nitric aqueous phase resulting from the dissolution of the fuel, to remove the neptunium, americium, curium and most of the fission products also contained in this phase, which decontaminating at least comprises co-extracting the uranium(VI) and plutonium(IV) in the organic phase containing the first extractant, this co-extracting being performed after and/or jointly with treating of said nitric aqueous phase to displace the redox equilibrium existing between the oxidation states V and VI of the neptunium towards the formation of neptunium(V);
b) co-stripping, in a nitric aqueous phase, the uranium and plutonium co-extracted at step a), the uranium being stripped in oxidation VI and the plutonium being stripped in oxidation states IV and VI;
c) partitioning the uranium and plutonium present in the nitric aqueous phase stemming from step b) into a first aqueous phase containing a mixture of uranium and plutonium, and a second aqueous phase containing uranium without plutonium, which partitioning at least comprises:
- selectively extracting a fraction of the uranium, in oxidation state VI, in the organic phase containing the second extractant, this extracting being performed after treating the aqueous phase stemming from step b) to reduce the plutonium(VI) present in this phase to plutonium(IV); and
- stripping, in a nitric aqueous phase, the uranium(VI) thus extracted; and
d) purifying the mixture of uranium and plutonium present in the aqueous phase stemming from the extraction of step c), to remove any fission products which may still be present in this phase.

6. The process according to claim 5, wherein step d) at least comprises:
- extracting the mixture of uranium and plutonium present in the aqueous phase stemming from the extraction of step c), in oxidation states VI and IV respectively, in an organic phase non-miscible with water and containing a third extractant which is different from the second extractant and which is more capable of extracting uranium(VI) and plutonium(IV) than fission products from an acid aqueous phase; and
- stripping, in a nitric aqueous phase, of the mixture of uranium(VI) and plutonium(IV) thus extracted.

7. The process according to claim 1, which at least comprises the following steps:
a) decontaminating of the uranium and plutonium present in the nitric aqueous phase resulting from the dissolution of the fuel, to remove the neptunium, americium, curium and most of the fission products also contained in this phase, which decontaminating at least comprises co-extracting the uranium(VI) and plutonium(IV) in the organic phase containing the first extractant, this co-extracting being performed after and/or jointly with treating said nitric aqueous phase to displace the redox equilibrium existing between the oxidation states V and VI of the neptunium towards the formation of neptunium(V);
b) co-stripping, in a nitric aqueous phase, of the uranium and plutonium co-extracted at step a), the uranium being stripped in oxidation VI and the plutonium being stripped in oxidation states IV and VI;
c) partitioning the uranium and plutonium present in the nitric aqueous phase stemming from step b) into a first aqueous phase containing plutonium without uranium and a second aqueous phase containing uranium without plutonium, which partitioning at least comprises:
- selectively extracting all the uranium, in oxidation state VI, in the organic phase containing the second extractant, this extracting being performed after treating the aqueous phase stemming from step b) to reduce the plutonium(VI) present in this phase to plutonium(IV); and
- stripping, in a nitric aqueous phase, the uranium(VI) thus extracted; and
d) purifying the plutonium present in the aqueous phase stemming from the extraction of step c), to remove any fission products which may still be present in this phase.

8. The process according to claim 7, wherein step d) at least comprises:
- extracting the plutonium present in the aqueous phase stemming from the extraction of step c), in oxidation state IV, in an organic phase non-miscible with water and containing a third extractant which is different from the second extractant and which is more capable of extracting plutonium(IV) than fission products from an acid aqueous phase; and
- stripping, in a nitric aqueous phase, the plutonium(IV) thus extracted.

9. The process according to claim 1, which at least comprises the following steps:
a) decontaminating the uranium, plutonium and neptunium present in the nitric aqueous phase resulting from the dissolution of the fuel, to remove the americium, curium and most of the fission products also contained in this phase, which decontaminating comprises at least co-extracting the uranium(VI), plutonium(IV) and neptunium, in oxidation state VI, in the organic phase containing the first extractant;
b) co-stripping, in a nitric aqueous phase, the uranium, plutonium and neptunium co-extracted at step a), the uranium being stripped in oxidation state VI, the plutonium being stripped in oxidation states IV and VI and the neptunium being stripped in oxidation states V and VI;
c) partitioning the uranium, plutonium and neptunium present in the nitric aqueous phase stemming from step b) into a first aqueous phase containing a mixture of plutonium and neptunium without uranium, and a second aqueous phase containing uranium without either plutonium or neptunium, which partitioning at least comprises:
- selectively extracting all the uranium, in oxidation state VI, in the organic phase containing the second extractant, this extraction being performed after treating the aqueous phase stemming from step b) to reduce the plutonium(VI) present in this phase to plutonium(IV); and
- stripping, in a nitric aqueous phase, the uranium(VI) thus extracted; and
d) purifying the mixture of plutonium and neptunium present in the aqueous phase stemming from the extraction of step c) to remove any fission products which may still be present in this phase.

10. The process according to claim 9, wherein step d) at least comprises:
- extracting the mixture of plutonium and neptunium present in the aqueous phase stemming from step c), in oxidation states IV and VI respectively, in an organic phase non-miscible with water and containing a third extractant which is different from the second extractant and which is more capable of extracting plutonium(IV) than fission products from an acid aqueous phase; and
- stripping, in a nitric aqueous phase, the mixture of plutonium(IV) and neptunium(VI) thus extracted.

11. The process according to claim 10, which, during the extraction of step d), comprises treating of the nitric aqueous phase stemming from the extraction of step c) to displace the redox equilibrium existing between the oxidation states V and VI of the neptunium towards the formation of neptunium(VI).

12. The process according to any of claims 3 to 11, wherein the same extractant is used as first and third extractant.

13. The process according to claim 12, wherein tri-n-butyl phosphate is used as first and third extractant.

14. The process according to any of the preceding claims, wherein the second extractant is chosen from the *N,N*-dialkylamides.

15. The process according to claim 14, wherein the second extractant is N,N-di-(2-ethyl-hexyl)isobutanamide.

16. The process according to any of the preceding claims, wherein step c) comprises adding nitrous acid to the nitric aqueous phase stemming from step b).

17. The process according to claim 4 or claim 11, wherein the treatment which is performed during the extraction of step d) comprises adding of nitrous acid.

18. The process according to any of the preceding claims, which further comprises, between steps b) and c), concentrating the nitric aqueous phase stemming from step b).

19. The process according to any of the preceding claims, which further comprises, between steps c) and d), concentrating the nitric aqueous phase stemming from the extraction of step c).

20. The process according to any of the preceding claims, wherein the spent nuclear fuel is an uranium oxide fuel or an uranium and plutonium mixed oxide fuel.
